# EUROPÄISCHE PATENTSCHRIFT

(11) **EP 3 131 800 B1**
(45) Veröffentlichungstag und Bekanntmachung des Hinweises auf die Patenterteilung: **10.04.2019**
(21) Anmeldenummer: 15734591.9
(22) Anmeldetag: 22.06.2015
(51) Int. Cl.: B62D 53/00, B61D 17/20, B61G 5/02

(54) **GELENKFAHRZEUG MIT EINEM QUERVERSCHIEBBAREN GELENK**
ARTICULATED VEHICLE WITH A TRANSVERSELY DISPLACEABLE JOINT
VÉHICULE ARTICULÉ COMPORTANT UNE ARTICULATION DÉPLAÇABLE DE MANIÈRE TRANSVERSALE

(30) Priorität: 26.06.2014 DE 102014212360
(43) Veröffentlichungstag der Anmeldung: 22.02.2017
(73) Patentinhaber: Siemens Mobility GmbH, 81739 München (DE)
(72) Erfinder: VEMMER, Friedrich, 90768 Fürth (DE); RICHTER, Wolfgang-Dieter, 90610 Winkelhaid (DE)
(86) Internationale Anmeldenummer: PCT/EP2015/063954
(87) Internationale Veröffentlichungsnummer: WO 2015/197543

(56) Entgegenhaltungen:
- EP-A1- 1 245 468
- EP-A1- 2 695 790
- DE-A1-102005 047 903
- US-A- 3 854 420

## Beschreibung

Die Erfindung betrifft ein Gelenkfahrzeug mit einem ersten und wenigstens einem weiteren, zweiten Wagenkasten, welche über ein erstes Gelenk miteinander gekuppelt sind, wobei das erste Gelenk zwischen dem ersten und dem zweiten Wagenkasten angeordnet und zumindest zur Ausführung einer Drehbewegung des ersten und des zweiten Wagenkastens um eine Hochachse des Gelenkfahrzeugs und zur Übertragung von Antriebs- und Bremskräften zwischen dem ersten und dem zweiten Wagenkasten geeignet ausgebildet ist.

Gelenkfahrzeuge, insbesondere großräumige Fahrzeuge zur Personenbeförderung, der eingangs genannten Art, wie z. B. Schienenfahrzeuge des Personenverkehrs oder auch Gelenkbusse, sind aus dem Stand der Technik hinreichend bekannt.

Beim Befahren enger Gleistrassierungen können die Ausdrehwinkel der Fahrwerke von Schienenfahrzeugen an ihre Auslegungsgrenzen kommen. Dies betrifft insbesondere Niederflurfahrzeuge, bei denen die Ausdrehwinkel aufgrund der niederflurigen Ausführung über den Fahrwerken konstruktiv eingeschränkt sind.

Zu unterscheiden sind dabei sogenannte Doppelgelenkfahrzeuge (z.B. DE 10 2010 040 840 A1 oder DE 10 2006 049 868 B3) und echte Multigelenkfahrzeuge (z.B. DE 94 09 044 U1 oder EP 1 580 093 B1) von sogenannten Einzelgelenkfahrzeugen (z.B. DE 35 04 471 A1) oder auch Kurzgelenkwagen genannt, wobei Einzelgelenkfahrzeuge gegenüber Multigelenkfahrzeugen ein gutes dynamisches Fahrverhalten aufweisen, jedoch weiteren Beschränkungen ihrer Fähigkeit zum Befahren enger Gleistrassierungen unterliegen können. Wesentlich sind jeweils die Anzahl der Gelenke, mittels welcher die Wagenkästen miteinander verbunden sind, welche jeweils auf Fahrwerken oder Drehgestellen abgestützt sind.

Die ebenfalls in niederfluriger Ausführung gebauten klassischen Drehgestellfahrzeuge, welche mittels Doppelgelenk bzw. Kupplung zu Gelenkfahrzeugen zusammengefügt werden können (z.B. DE 195 43 183 A1), weisen bezüglich dem Befahren enger Gleistrassierungen ähnliche Beschränkungen auf wie die Einzelgelenkfahrzeuge.

Auch Einzelgelenkfahrzeuge können mehrere Gelenke zwischen den Wagenkästen aufweisen. Sie weisen beispielsweise untere und obere Gelenke auf. Die unteren Gelenke sind zur Kupplung und Übertragung der Antriebs-, Brems- und gegebenenfalls Gewichtskräfte zwischen den Wagenkästen vorgesehen. Die oberen Gelenke dienen der Freigabe oder der Einschränkung von Nick- und/oder Wankbewegungen zwischen den Wagenkästen. Bei einer Wankbewegung verwinden sich die Wagenkästen zueinander. Für wank- oder verwindeweiche obere Gelenke sind eine Vielzahl von Lösungen bekannt, z.B. aus der EP 1 647 462 B1, der DE 1 164 246 A, DE 10 2005 016 713 A1 oder der DE 4 446 282 C1. Auch die EP 2 695 790 A1 lehrt ein Dachgelenk um Wankbewegungen zwischen zwei Wagenkästen zu ermöglichen während Nickbewegungen ausgeschlossen werden. Umgekehrt offenbart die DE 10 2005 047 903 A1 eine nickweiche Dachgelenkanordnung.

Die unteren Gelenke sind dabei oft als sphärisch bewegliche Gelenke ausgebildet und über Konsolen mit den Wagenkästen starr verbunden. Diese unteren Gelenke, die als Baugruppe beispielsweise durch die DE 101 39 970 A1 bekannt sind, lassen Drehbewegungen der Wagenkästen um die Hochachse (z-Achse) und - je nach Ausführung - prinzipiell auch Nickbewegungen sowie Wankbewegungen zu.

EP 1 245 468 A1 zeigt ein Gelenkfahrzeug mit einem Gelenk, durch welches der Abstand der beiden Fahrzeugteile verringert werden kann. Das Gelenk weist dazu wenigstens einen Gelenkarm auf, der um zwei Gelenkglieder drehbar gelagert ist. Multigelenkfahrzeuge oder Doppelgelenkfahrzeuge sind geeignet enge Bogenfolgen ohne Übergangsbögen oder mit kleinen Bogenradien zu befahren, jedoch müssen die Fahrwerke mit einer hohen Ausdrehsteifigkeit an die Wagenkästen angebunden werden. Ansonsten neigen die Fahrzeuge zu einem Ausknicken und einem damit verbundenden Entgleisen unter Längskrafteinfluss beim Bremsen und Beschleunigen bzw. im Bergebetrieb. Dies führt zu einem deutlich verschlechterten Fahrkomfort, einer geringeren dynamischen Sicherheit gegen Entgleisen sowie zu einem erhöhten Rad-Schiene-Verschleiß. Ebenfalls nachteilig bei den Multigelenkfahrzeugen gegenüber Einzelgelenkfahrzeugen ist, dass die langen Sänftenmodule zu einer sehr ungleichmäßigen Achslastverteilung über das Fahrzeug, und damit sehr hohen Achslasten an den mittleren Fahrwerken führen, und dass die Gelenke einer hohen vertikalen Stützlast unterliegen. Die hohe Anzahl an Gelenkbereichen und damit auch Wagenkästen führt weiterhin zu einem weniger attraktiven Innenraum sowie einem hohen konstruktiven Aufwand.

Die DE 10 2010 040 840 A1 zeigt ein Fahrzeug mit Doppelgelenk. Es wird vorgeschlagen, anstelle einer Nickkopplung einen der Doppelgelenkspunkte nicksteif auszuführen, so dass sich ein Doppelgelenk mit nur einem Nickfreiheitsgrad ergibt. Zusätzlich kann ein Längslenker im Dachbereich angeordnet sein. Alternativ wird vorgeschlagen, ein 3-teiliges Fahrzeug so auszubilden, dass jeweils zwei einseitig nicksteife Doppelgelenke mittels einer kinematischen Kopplung im Dachbereich miteinander gekoppelt werden, so dass sich an beiden Gelenken der jeweils gleiche Nickwinkel einstellt.

Einzelgelenkfahrzeuge hingegen sind nur bedingt geeignet, Gleisharfen mit ihren Kurz-Bögen, enge C- oder S-Bögen, wie sie insbesondere im Bereich von Fahrzeug-Abstellanlagen auftreten, zu befahren. Darüber hinaus weisen Einzelgelenkfahrzeuge einen erhöhten statischen Lichtraumbedarf bei Bogeneinfahrten auf.

Der Erfindung liegt die Aufgabe zugrunde, ein Gelenkfahrzeug zum Betrieb bei komplexer Trassierung und fehlenden Übergangsbögen mit gleichzeitig geringem Lichtraumbedarf anzugeben.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Gelenkfahrzeug, insbesondere ein Einzelgelenkfahrzeug, beispielsweise ein Niederflur-Schienenfahrzeug des Personennahverkehrs, umfasst einen ersten und wenigstens einen weiteren, zweiten Wagenkasten, welche über ein erstes Gelenk miteinander gekuppelt sind. Das erste Gelenk ist zwischen dem ersten und dem zweiten Wagenkasten angeordnet und es ist zumindest zur Ausführung einer Drehbewegung des ersten und des zweiten Wagenkastens um eine Hochachse des Gelenkfahrzeugs geeignet ausgebildet. Darüber hinaus ist das erste Gelenk geeignet ausgebildet zur Übertragung von Antriebs- und Bremskräften zwischen dem ersten und dem zweiten Wagenkasten. Des Weiteren kann das erste Gelenk geeignet ausgebildet sein zur Übertragung von Stützlasten zwischen dem ersten und dem zweiten Wagenkasten.

Erfindungsgemäß ist das erste Gelenk derart beweglich zum ersten Wagenkasten am ersten Wagenkasten angeordnet und mit dem ersten Wagenkasten verbunden, dass der Drehpunkt der Drehbewegung des ersten und des zweiten Wagenkastens um die Hochachse des Gelenkfahrzeugs quer zur Längsachse des ersten Wagenkastens bewegbar ist und dadurch neben den Schwenkbewegungen um die Hochachse auch Bewegungen, insbesondere Verschiebungen, des ersten und des zweiten Wagenkastens zueinander in Richtung der Fahrzeugquerachse ermöglicht.

Die Drehbewegung der Wagenkästen um die Hochachse wird auch als Schwenkbewegung bezeichnet und das erste Gelenk ist entsprechend ausgebildet zumindest zur Ausführung von Schwenkbewegungen des ersten und des zweiten Wagenkastens zueinander. Beispielsweise ist das erste Gelenk als Schwenklager ausgebildet, um bei Kurvenfahrt Drehbewegungen der Wagenkästen um die Fahrzeughochachse zuzulassen. Der Drehpunkt der Drehbewegung des ersten und des zweiten Wagenkastens um die Hochachse des Gelenkfahrzeugs liegt dabei in der Hochachse des Gelenkfahrzeugs. Das erste Gelenk kann darüber hinaus ausgebildet sein zur Ausführung einer Nickbewegung des ersten und des zweiten Wagenkastens um eine Querachse des Gelenkfahrzeugs und/oder zur Ausführung einer Wankbewegung des ersten und des zweiten Wagenkastens um eine Längsachse des Gelenkfahrzeugs. Das erste Gelenk ist insbesondere als sphärisches Gelenk ausgebildet. Die Hochachse des Gelenkfahrzeugs verläuft bei einem auf einer horizontalen Ebene stehenden Gelenkfahrzeug vertikal. Eine Längsachse des Gelenkfahrzeugs und eine Querachse des Gelenkfahrzeugs liegen in einer horizontalen Ebene und stehen senkrecht aufeinander und selbstredend orthogonal zur Hochachse. Die Längsachse des Gelenkfahrzeugs zeigt dabei bei einem eine kurvenfreie gerade Strecke befahrenden Gelenkfahrzeug in Fahrtrichtung. Analog sind die Achsen eines Wagenkastens definiert. Sie verlaufen in den beschriebenen Zuständen des Gelenkfahrzeugs parallel zu den entsprechenden Achsen des Gelenkfahrzeugs oder fallen mit diesen zusammen.

Eine Bewegung des Drehpunkts der Drehbewegung des ersten und des zweiten Wagenkastens um die Hochachse des Gelenkfahrzeugs quer zur Längsachse des ersten Wagenkastens weist somit zumindest eine Richtungskomponente in Richtung der Querachse des ersten Wagenkastens auf. Dabei kann es sich um eine Verschiebung des Drehpunkts ausschließlich parallel zur oder entlang der Querachse des ersten Wagenkastens handeln oder aber beispielsweise auch um eine Bewegung des Drehpunkts auf einer Kreisbahn oder auf weiteren Bahnen ungleich einer Geraden, wobei dann zur Bewegung mit einer Richtungskomponenten in Richtung der Querachse des ersten Wagenkastens eine Bewegung mit einer Richtungskomponenten in Richtung der Hoch- oder der Längsachse hinzukommt.

Das erste Gelenk ist als einfaches Dreh- oder Scharniergelenk ausgebildet, oder es ist analog als Kugelgelenk bzw. sphärisches Gelenk ausgebildet. Es ist ein erster Gelenkkörper des ersten Gelenks um eine Gelenkachse drehbar in oder an einem zweiten Gelenkkörper des ersten Gelenks gelagert. Beispielsweise ist ein Kugelkopf als erster Gelenkkörper in einer komplementär ausgestalteten Gelenkpfanne als zweitem Gelenkkörper um eine Gelenkachse, welche koaxial durch den Kugelkopf und durch die Gelenkpfanne verläuft, drehbar gelagert. Dann fallen die Gelenkachse des ersten Gelenks und die Hochachse des Gelenkfahrzeugs, um welche der erste und der zweite Wagenkasten drehbar über das erste Gelenk miteinander verbunden sind, zusammen, wobei der Drehpunkt der Drehbewegung des ersten und des zweiten Wagenkastens um die Hochachse des Gelenkfahrzeugs in der Hochachse liegt. Um in diesen Fällen den Drehpunkt der Drehbewegung des ersten und des zweiten Wagenkastens um die Hochachse des Gelenkfahrzeugs quer zur Längsachse des ersten Wagenkastens zu bewegen, ist das erste Gelenk in einfacher Weise quer zur Längsachse des ersten Wagenkastens bewegbar mit dem ersten Wagenkasten verbunden. Beispielsweise ist es entlang einer Achse verschiebbar am ersten Wagenkasten anzuordnen, z.B. mittels einer Konsole, die am ersten Wagenkasten in Querrichtung des ersten Wagenkastens verschiebbar gehalten ist. Eine Weiterbildung der Erfindung sieht daher vor, dass das Gelenk derart ausgebildet ist, dass der Drehpunkt der Drehbewegung des ersten und des zweiten Wagenkastens um die Hochachse des Gelenkfahrzeugs in einer Gelenkachse des ersten Gelenks liegt, wobei das erste Gelenk quer zur Längsachse des ersten Wagenkastens bewegbar am ersten Wagenkasten angeordnet und mit diesem verbunden ist, so dass der Drehpunkt der Drehbewegung des ersten und des zweiten Wagenkastens um die Hochachse des Gelenkfahrzeugs quer zur Längsachse des ersten Wagenkastens bewegbar ist.

Wesentlich ist die Beweglichkeit des ersten und des zweiten Wagenkastens zueinander in Richtung der Fahrzeugquerachse. Hier ist zu Unterscheiden zwischen der Querbeweglichkeit der Wagenkästen und Wankbewegungen der Wagenkästen zueinander. Bei Bewegungen des ersten und des zweiten Wagenkastens zueinander in Richtung der Fahrzeugquerachse, verlaufen die Hochachsen der beiden Wagenkästen vertikal und somit parallel zueinander. Bei Wankbewegungen hingegen sind die Wagenkästen frei von einer Verschiebung zueinander, sie neigen sich lediglich und somit weisen ihre Hochachsen einen Winkel größer Null auf. Oft verlaufen beide Hochachsen bei Wankbewegungen auch nicht mehr in vertikaler Richtung.

Wankbewegungen werden ermöglicht durch ein unteres Gelenk, welches die meisten zwischen den Wagenkästen auftretenden Kräfte in Richtung der Längs-, Quer- und Hochachse des Gelenkfahrzeugs aufnimmt und weiterleitet, und durch ein oberes Gelenk, welches in Fahrzeugquerrichtung bewegbar an einem Wagenkasten angeordnet ist. Das obere Gelenk überträgt dabei im Vergleich wenige Kräfte von einem Wagenkasten auf den anderen. Das untere Gelenk ist entsprechend ausgestaltet, Wankbewegungen zuzulassen. Um Wank- und Nickbewegungen zuzulassen hat sich ein sphärisches Gelenk als unteres Gelenk bewährt.

Die Übertragung von Antriebs- und Bremskräften zwischen einem Wagenkasten und dem Drehgestell, auf welchem der Wagenkasten abgestützt ist, insbesondere einem Antriebsdrehgestell, erfolgt über eine längssteife Kopplung des Drehgestells an den Wagenkasten. Zwischen zwei benachbarten und miteinander über ein Gelenk gekuppelten Wagenkästen erfolgt die Übertragung von Antriebs- und Bremskräften, welche in Längsrichtung des Gelenkfahrzeugs weisen, mittels des Gelenks. Sind ein unteres und ein oberes Gelenk vorgesehen, werden die Antriebs- und Bremskräfte, und gegebenenfalls auch Stützlasten, mittels des unteren Gelenks übertragen. Es ist entsprechend dimensioniert.

Das erste Gelenk der Erfindung dient der Übertragung von Antriebs- und Bremskräfte, und gegebenenfalls auch der Übertragung von Stützlasten, und ist daher entsprechend ausgebildet und vorteilhaft im unteren Bereich der Wagenkästen zwischen dem ersten und dem zweiten Wagenkasten angeordnet, insbesondere zwischen den jeweiligen Drehgestellen, auf welchen die Wagenkästen aufgestützt sind. Das erste Gelenk ist damit keinem der beiden Wagenkästen zugeordnet und von beiden beabstandet angeordnet. Gemäß einer weiteren Weiterbildung der Erfindung ist das erste Gelenk unterhalb eines Wagenübergangs zwischen dem ersten und dem zweiten Wagenkasten angeordnet. Der Wagenübergang dient zum Übergang von Personen zwischen dem ersten und dem zweiten Wagenkasten. Im Gegensatz zum Einzelgelenkfahrzeugen mit unteren und oberen Gelenken, wie beispielsweise der EP 1 647 462 B1, welche eine trassierungsabhängig erforderliche Querverschiebung der Wagenkasten-Untergestelle und Fahrwerke benachbarter Wagenkästen zueinander nicht erlauben, ermöglicht die erfindungsgemäße Gelenkanordnungen dagegen eine Querverschiebung der Wagenkasten-Untergestelle und Fahrwerke benachbarter Wagenkästen zueinander.

Weitergebildet ist das erste Gelenk geeignet ausgebildet zur Übertragung von Stützlasten zwischen dem ersten und dem zweiten Wagenkasten. Stützlasten wirken insbesondere in Richtung der Hochachse und somit in vertikaler Richtung. Stützlasten müssen insbesondere aufgenommen werden, wenn ein Wagenkasten selbst nicht auf einem Fahrwerk oder Drehgestell abgestützt ist oder die Schwerpunktlagen der Wagenkästen bei einem Einzelgelenkfahrzeug von den Drehgestellmitten abweichen. Sie ergeben sich somit hauptsächlich aus den Gewichtskräften der Wagenkästen.

Gemäß einer weiteren Weiterbildung des erfindungsgemäßen Gelenkfahrzeugs ist das erste Gelenk starr mit dem zweiten Wagenkasten verbunden. Das erste Gelenk umfasst wenigstens zwei zueinander bewegliche Gelenkteile, beispielsweise eine Gelenkpfanne und einen Kugelkopf. Wenigstens ein Gelenkteil ist dann starr am zweiten Wagenkasten so angeordnet, dass keine Relativbewegung zwischen dem entsprechenden Gelenkteil und dem zweiten Wagenkasten ermöglicht ist. Beispielsweise ist das erste Gelenk mittels einer Konsole am zweiten Wagenkasten befestigt.

Eine weitere Weiterbildung ist darin zu sehen, dass das erste Gelenk in Querrichtung des ersten Wagenkastens beweglich, insbesondere in Querrichtung des ersten Wagenkastens verschiebbar am ersten Wagenkasten angeordnet und mit diesem verbunden ist. Eine Verschiebbarkeit in Querrichtung des ersten Wagenkastens ist beispielsweise durch eine Konsole realisiert, welche am ersten Wagenkasten in Querrichtung des ersten Wagenkastens verschiebbar, beispielsweise entlang einer Achse, angeschlossen ist und mit welcher Konsole wenigstens ein Gelenkteil des ersten Gelenks verbunden ist.

Eine Ausführungsform sieht vor, dass der erste Gelenkkörper des ersten Gelenks, in Querrichtung des ersten Wagenkastens verschiebbar mit dem ersten Wagenkasten verbunden istund, dass das erste Gelenk, insbesondere ein zweiter Gelenkteil oder ein zweiter Gelenkkörper des ersten Gelenks, mit dem zweiten Wagenkasten starr verbunden ist.

Gemäß einer alternativen Ausgestaltung der Erfindung ist das erste Gelenk um die Hochachse des Gelenkfahrzeugs drehbar mit dem ersten Wagenkasten verbunden. Das erste Gelenk ist dann in einer Ebene schwenkbar am ersten Wagenkasten angeordnet. Die Ebene ist insbesondere eine horizontale Ebene senkrecht zur Fahrzeughochachse. Die schwenkbare Verbindung des ersten Gelenks zum ersten Wagenkasten erfolgt insbesondere mittels eines dritten Gelenks.

Beispielsweise ist das dritte Gelenk mit dem ersten Wagenkasten verbunden und an einer zum zweiten Wagenkasten weisenden Stirnseite des ersten Wagenkastens angeordnet. Das erste Gelenk ist, beispielsweise als Dreh- oder Scharniergelenk oder als Kugelgelenk bzw. sphärisches Gelenk, derart ausgeführt, dass der Drehpunkt der Drehbewegung des ersten und des zweiten Wagenkastens um die Hochachse des Gelenkfahrzeugs in einer Gelenkachse des ersten Gelenks liegt. Das dritte Gelenk könnte ebenfalls, beispielsweise als Dreh- oder Scharniergelenk oder als Kugelgelenk bzw. sphärisches Gelenk, derart ausgeführt sein, dass der Drehpunkt der Drehbewegung des ersten Gelenks und des ersten Wagenkastens um die Hochachse des Gelenkfahrzeugs in einer Gelenkachse des dritten Gelenks liegt. Zwischen dem ersten Gelenk und dem dritten Gelenk ist eine Gelenk- oder Koppelstange angeordnet. Dann ist der Drehwinkel des dritten Gelenks der Winkel zwischen der Längsachse des ersten Wagenkastens und der Gelenkstange zwischen dem ersten und dem dritten Gelenk.

Diese Ausführungsform ist jedoch nicht zu verwechseln mit einem sogenannten Doppelgelenk. Fahrzeuge mit Doppelgelenken sind zwar ebenfalls geeignet, enge Bogenfolgen ohne Übergangsbögen oder mit kleinen Bogenradien zu befahren, jedoch weisen sie andere Nachteile auf, wie sie oben teilweise beschrieben sind. Zum Befahren enger Bogenfolgen werden an beiden Drehpunkten eines Doppelgelenkes größenordnungsmäßig gleich große Schwenkwinkel benötigt, die je nach Trassierung allerdings gleich oder unterschiedlich gerichtet sein können und in unterschiedlichen Verhältnissen zueinander stehen können. D.h. ohne eine komplexe Steuerung mit exakter Trassierungserkennung ist es bei den Doppelgelenkfahrzeugen nicht möglich die Gelenke gegen Ausknicken abzusichern, ohne gleichzeitig die erforderlichen Schwenkwinkel für die Bogenfahrt mit zu blockieren. Es sei darauf hingewiesen, dass die in etwa gleich großen Schwenkwinkel der beiden Doppelgelenkpunkte eine klare Funktionstrennung zwischen den Hauptbewegungen Schwenken der Wagenkästen zueinander und Querverschiebung der Wagenkästen zueinander nicht gestatten. Dadurch ist eine fahrdynamisch und betrieblich wünschenswerte Beschränkung der Querbewegung zwischen den Wagenkästen unabhängig von der Schwenkbewegung zwischen den Wagenkästen nicht möglich. Weiterhin nachteilig ist der durch die langen Balgbereiche unattraktive Fahrgastraum.

Neben dem geringen Lichtraumbedarf weist die Erfindung zusätzlich den Vorteil gleichmäßiger Achslastverteilung und geringer Gelenklasten auf.

Schematisch weist ein nick- und wanksteifes Doppelgelenk zwischen zwei Wagenkästen zwei Gelenke mit Gelenkachsen auf, welche parallel zueinander und parallel zur Fahrzeughochachse verlaufen. Zwischen den Gelenken befindet sich eine Gelenkstange. Die Winkel der Längsachsen der Wagenkästen zur Gelenkstange sind bei einem vollständig in einem Bogen befindlichen Fahrzeug gleich groß. Hierfür würden nur Gelenkwinkel in der Größenordnung von jeweils ca. 15° bis 20° benötigt. Um enge Bogenfolgen befahren zu können werden dagegen jeweils beispielsweise 35° benötigt, was zu entsprechend langen Balgbereichen führt. Somit betrüge der theoretisch mögliche Winkel zwischen den Längsachsen der Wagenkästen bis zu 70°, was aber die genannten Nachteile mit sich bringen würde.

Im Gegensatz dazu beträgt der maximale Drehwinkel des ersten Gelenks bei einer Drehbewegung des ersten und des zweiten Wagenkastens um die Hochachse des Gelenkfahrzeugs weitergebildet mindestens 30°, insbesondere mindestens 38°. Der maximale Drehwinkel ist der vom ersten Gelenk zugelassene größtmögliche Drehwinkel. Das erste Gelenk ist konstruktiv so ausgebildet, den maximalen Drehwinkel nicht zu überschreiten, beispielsweise mittels Endanschlägen. Dabei können diese Endanschläge auch direkt zwischen den einander zugewandten Enden des ersten und zweiten Wagenkastens angeordnet sein und so auch den sekundären geringeren Schwenkwinkel des dritten Gelenkes beschränken.

Das dritte Gelenk ist weitergebildet konstruktiv so ausgebildet, dass der maximale Drehwinkel des dritten Gelenks deutlich kleiner ist als der maximale Drehwinkel des ersten Gelenks.

Insbesondere bei einer Kurz-Bogenfahrt oder einem Befahren eines C- oder S-Bogen trägt eine Bewegung des ersten Gelenks bzw. des Drehpunkts der Drehbewegung des ersten und des zweiten Wagenkastens um die Hochachse des Gelenkfahrzeugs quer zur Längsachse des ersten Wagenkastens, insbesondere eine Drehbewegung des ersten Gelenks und des ersten Wagenkastens um die Hochachse des Gelenkfahrzeugs, nicht maßgeblich zu einer Drehbewegung des ersten und des zweiten Wagenkastens um die Hochachse des Gelenkfahrzeugs bei. Das dritte Gelenk trägt nicht zur Drehbewegung des ersten und des zweiten Wagenkastens um die Hochachse des Gelenkfahrzeugs bei. Insbesondere dient das dritte Gelenk ausschließlich zur Bewegung des ersten Gelenks quer zur Längsachse des ersten Wagenkastens bzw. zur Bewegung des Drehpunkts der Drehbewegung des ersten und des zweiten Wagenkastens um die Hochachse des Gelenkfahrzeugs quer zur Längsachse des ersten Wagenkastens bei.

Erreicht wird dies beispielsweise dadurch, dass das Gelenkfahrzeug wenigstens ein Rückstellelement umfasst, welches ausgebildet ist, eine vorgegebene Kraft größer Null auf das erste Gelenk oder auf eine Verbindung des ersten Gelenks mit dem ersten Wagenkasten aufzubringen, welche einer Bewegung des Drehpunkts der Drehbewegung des ersten und des zweiten Wagenkastens um die Hochachse des Gelenkfahrzeugs quer zur Längsachse des ersten Wagenkastens aus einer vorgegebenen Ruhelage heraus entgegenwirkt. Als Verbindung des ersten Gelenks mit dem ersten Wagenkasten dienen beispielsweise Konsolen oder Koppelstangen.

In der vorgegebenen Ruhelage sind die Wagenkästen frei von einer Querverschiebung zueinander, die Längsachse des ersten Wagenkastens und die Längsachse des zweiten Wagenkastens fallen zusammen. Der Drehpunkt der Drehbewegung des ersten und des zweiten Wagenkastens um die Hochachse des Gelenkfahrzeugs liegt insbesondere in der vorgegebenen Ruhelage auf einer Längsachse des ersten Wagenkastens des Gelenkfahrzeugs. In der vorgegebenen Ruhelage ist das erste Gelenk frei von äußeren Kräften quer zur Längsachse des ersten Wagenkastens.

Ist ein drittes Gelenk zur Verbindung des ersten Gelenks mit dem ersten Wagenkasten vorgesehen, wird eine Drehbewegung des dritten Gelenks durch die vorgegebene Kraft blockiert. Wirkt ein Drehmoment im dritten Gelenk der Bewegung des Drehpunkts der Drehbewegung des ersten und des zweiten Wagenkastens um die Hochachse des Gelenkfahrzeugs quer zur Längsachse des ersten Wagenkastens aus einer vorgegebenen Ruhelage heraus entgegen, gilt das Drehmoment mit der Angabe der vorgegebenen Kraft, die das Drehmoment bewirkt, als mit umfasst.

Die Kraft des Rückstellelements wirkt allgemein mit zumindest einer Richtungskomponente quer zur Längsachse des ersten Wagenkastens zur Ruhelage des Drehpunkts der Drehbewegung des ersten und des zweiten Wagenkastens um die Hochachse des Gelenkfahrzeugs hin. Die zumindest eine Richtungskomponente quer zur Längsachse des ersten Wagenkastens der Kraft des Rückstellelements weist einen vorgegebenen Betrag größer Null auf.

Eine Bewegung des Drehpunkts der Drehbewegung des ersten und des zweiten Wagenkastens um die Hochachse des Gelenkfahrzeugs aus der Ruhelage heraus quer zur Längsachse des ersten Wagenkastens ist somit erst möglich, wenn die vorgegebene Kraft, welche quer zur Längsachse des ersten Wagenkastens zur Ruhelage des Drehpunkts der Drehbewegung des ersten und des zweiten Wagenkastens um die Hochachse des Gelenkfahrzeugs hin wirkt und durch das Rückstellelement aufgebracht wird, überschritten wird.

Gemäß einer weiteren Weiterbildung ist die vorgegebene Kraft größer als ein Reibmoment im ersten Gelenk, welches der Drehbewegung des ersten und des zweiten Wagenkastens um die Hochachse des Gelenkfahrzeugs entgegenwirkt.

Gemäß einer weiteren Weiterbildung steht die vorgegebene Kraft in einem vorgegebenen Verhältnis zum Ausdrehwinkel und/oder zum Ausdrehmoment eines Fahrwerks des ersten und/oder des zweiten Wagenkastens. Die vorgegebene Kraft kann auch allgemeiner in einem vorgegebenen Verhältnis zum Ausdrehwinkel bzw. zum Ausdrehmoment eines oder mehrerer Fahrwerke unter den Wagenkästen, welche die Querverschieblichkeit in engen Bogenfolgen erforderlich machen, stehen.

Die vorgegebene Kraft wird insbesondere mechanisch, beispielsweise mittels einer Feder, elektrisch, z.B. mittels eines Elektromotors, oder pneumatisch oder insbesondere hydraulisch aufgebracht. Das Rückstellelement ist weitergebildet entsprechend am ersten Wagenkasten angeordnet und/oder mit diesem verbunden und mit dem ersten Gelenk oder mit der Verbindung des ersten Gelenks mit dem ersten Wagenkasten, beispielsweise dem dritten Gelenk oder einer Gelenk- oder Koppelstange zwischen dem ersten und dem dritten Gelenk, verbunden.

Eine weitere Weiterbildung der Erfindung sieht vor, dass die vorgegebene Kraft, welche vom wenigstens einen Rückstellelement auf das erste Gelenk oder auf eine Verbindung des ersten Gelenks mit dem ersten Wagenkasten aufgebracht wird und welche einer Bewegung des Drehpunkts der Drehbewegung des ersten und des zweiten Wagenkastens um die Hochachse des Gelenkfahrzeugs quer zur Längsachse des ersten Wagenkastens aus einer vorgegebenen Ruhelage heraus entgegenwirkt, einem Wagenkastenmoment größer 5 kNm, insbesondere größer 10 kNm entspricht. Das Rückstellelement ist entsprechend geeignet ausgebildet, die vorgegebene Kraft aufzubringen.

In einer Variante umfasst das Gelenkfahrzeug wenigstens ein Dämpferelement, welches zumindest einer Bewegung des Drehpunkts der Drehbewegung des ersten und des zweiten Wagenkastens um die Hochachse des Gelenkfahrzeugs quer zur Längsachse des ersten Wagenkastens aus einer vorgegebenen Ruhelage heraus dämpft.

Weitergebildet dämpft das Dämpferelement jede Bewegung des Drehpunkts der Drehbewegung des ersten und des zweiten Wagenkastens um die Hochachse des Gelenkfahrzeugs quer zur Längsachse des ersten Wagenkastens, sei sie aus der Ruhelage heraus oder aus einer ausgelenkten Position in die Ruhelage zurück. Im Sinne einer Ausrichtung der Wagenkastenkette ist es sinnvoll, die Bewegung in die Ruhelage zurück schwächer zu bedämpfen.

Um die Bewegung des Drehpunkts der Drehbewegung des ersten und des zweiten Wagenkastens um die Hochachse des Gelenkfahrzeugs quer zur Längsachse des ersten Wagenkastens zu begrenzen und damit die Beweglichkeit des ersten und des zweiten Wagenkastens zueinander in Richtung der Fahrzeugquerachse einzuschränken, kann das Gelenkfahrzeug Endanschläge umfassen, welche ausgebildet und angeordnet sind zur Begrenzung der Bewegung des Drehpunkts der Drehbewegung des ersten und des zweiten Wagenkastens um die Hochachse des Gelenkfahrzeugs quer zur Längsachse des ersten Wagenkastens aus einer vorgegebenen Ruhelage heraus.

Die Ruhelage des Drehpunkts der Drehbewegung des ersten und des zweiten Wagenkastens um die Hochachse des Gelenkfahrzeugs quer zur Längsachse des ersten Wagenkastens ist festgelegt in einem Ruhezustand des Gelenkfahrzeugs. In diesem Ruhezustand steht das Gelenkfahrzeug auf einer horizontalen, kurvenfreien und geraden Strecke. Der Drehpunkt liegt in seiner Ruhelage beispielsweise auf der Fahrzeuglängsachse.

Weitergebildet sind die Endanschläge derart, insbesondere am ersten Wagenkasten, angeordnet, dass die Bewegung des Drehpunkts der Drehbewegung des ersten und des zweiten Wagenkastens um die Hochachse des Gelenkfahrzeugs quer zur Längsachse des ersten Wagenkastens aus der vorgegebenen Ruhelage heraus in beide Richtungen jeweils auf einen vorgegebenen Betrag begrenzt ist. Die Beträge für beide Richtungen sind vorteilhaft identisch, beispielsweise ist die Bewegung aus der Ruhelage heraus in beide Richtungen auf jeweils höchstens 0,3 m, insbesondere auf jeweils höchstens 0,2 m begrenzt.

Erfindungsgemäß ist vorteilhaft, dass das erste Gelenk derart beweglich mit dem ersten Wagenkasten verbunden ist, dass der Drehpunkt der Drehbewegung des ersten und des zweiten Wagenkastens um die Hochachse des Gelenkfahrzeugs quer zur Längsachse des zweiten Wagenkastens bewegbar ist und dadurch neben der Drehbewegung um die Hochachse auch Bewegungen des ersten und des zweiten Wagenkastens zueinander in Richtung der Fahrzeugquerachse ermöglicht.

Diese Querbeweglichkeit des ersten Gelenks zum zweiten Wagenkasten ist weitergebildet blockierbar. Dazu ist eine entsprechend geeignet Blockiervorrichtung vorgesehen. Die Blockierbarkeit ist insbesondere geeignet, eine Bewegung des ersten Gelenks quer zum zweiten Wagenkasten aus der vorgegebenen Ruhelage heraus zu blockieren. Darüber hinaus kann das Gelenkfahrzeug eine weitere Blockiervorrichtung zum Blockieren der Bewegung des Drehpunkts der Drehbewegung des ersten und des zweiten Wagenkastens um die Hochachse des Gelenkfahrzeugs quer zur Längsachse des ersten Wagenkastens umfassen. Auch diese Blockiervorrichtung ist dann insbesondere geeignet, die Bewegung des ersten Gelenks quer zum ersten Wagenkasten aus der vorgegebenen Ruhelage heraus zu blockieren.

Die Querbeweglichkeit des Drehpunkts des ersten Gelenks wird besonders in Engstellen des Streckennetzes, z.B. bei Depots, Wendeschleifen oder bei Krümmungswechsel mit engem Lichtraum, freigegeben. Bei der Bergung des Gelenkfahrzeugs durch Abschleppen oder Abschieben hingegen, wird die Bewegung des Drehpunkts des ersten Gelenks blockiert. Eine weitere Möglichkeit besteht darin, die Kraft auf die Blockiervorrichtung im blockierten Zustand zu messen und bei Überschreiten eines vorgegebenen Schwellwerts ein Signal auszugeben, insbesondere an den Fahrer des Gelenkfahrzeugs, oder die Antriebskräfte des Gelenkfahrzeugs zu beschränken, um eine Ausknickgefahr zu begrenzen.

Neben Blockiervorrichtungen zum Blockieren der Bewegung des Drehpunkts der Drehbewegung des ersten und des zweiten Wagenkastens um die Hochachse des Gelenkfahrzeugs quer zur Längsachse des ersten und/oder des zweiten Wagenkastens, kann das Gelenkfahrzeug auch eine Stellvorrichtung umfassen, zum Bewegen des Drehpunkts der Drehbewegung des ersten und des zweiten Wagenkastens um die Hochachse des Gelenkfahrzeugs quer zur Längsachse des ersten Wagenkastens und dadurch zum Bewegen des ersten und des zweiten Wagenkastens zueinander in Richtung der Fahrzeugquerachse. Fürderhin kann das Gelenkfahrzeug eine Steuervorrichtung umfassen zum aktiven Ansteuern der Stellvorrichtung, beispielsweise in Abhängigkeit eines Ausdrehwinkels eines Fahrwerks des ersten und/oder des zweiten Wagenkastens. So kann bei Überschreitung eines vorgegebenen Schwellwerts für einen Ausdrehwinkel des Fahrwerks oder Drehgestells des ersten und/oder des zweiten Wagenkastens eine proportionale Verschiebung der Wagenkästen zueinander in Querrichtung des ersten Wagenkastens vollzogen werden. Die Stellvorrichtung bringt eine vorgegebene Kraft analog zum Rückstellelement auf. Sie ist weitergebildet entsprechend ausgebildet und am ersten Wagenkasten angeordnet. Die vorgegebene Kraft wird insbesondere mechanisch, beispielsweise mittels einer Feder, elektrisch, z.B. mittels eines Elektromotors, oder pneumatisch oder insbesondere hydraulisch aufgebracht. Die Stellvorrichtung und das Rückstellelement sind weitergebildet identisch. Die Steuerungsvorrichtung kann dann zum aktiven Steuern des Rückstellelements dienen.

Eine weitere Weiterbildung der Erfindung sieht vor, dass das erste Gelenk derart beweglich mit dem zweiten Wagenkasten verbunden ist, dass der Drehpunkt der Drehbewegung des ersten und des zweiten Wagenkastens um die Hochachse des Gelenkfahrzeugs quer zur Längsachse des zweiten Wagenkastens bewegbar ist, wobei das Gelenkfahrzeug eine erste Kopplungseinrichtung umfasst, welche derart ausgebildet ist, dass eine Bewegung des Drehpunkts der Drehbewegung des ersten und des zweiten Wagenkastens um die Hochachse des Gelenkfahrzeugs quer zum ersten Wagenkasten um einen ersten Betrag zu einer Bewegung des Drehpunkts der Drehbewegung des ersten und des zweiten Wagenkastens um die Hochachse des Gelenkfahrzeugs quer zum zweiten Wagenkasten um einen vorgegebenen, vom ersten Betrag abhängigen, zweiten Betrag führt. Die Kopplungseinrichtung ist dazu insbesondere mit dem ersten und dem zweiten Wagenkasten verbunden. Die Kopplung kann wiederum mechanisch, elektrisch oder hydraulisch erfolgen. Die Kopplungseinrichtung umfasst mindestens eine Stellvorrichtung, beispielsweise entsprechend einer Ausführungsform wenigstens zwei Hydraulikzylinder, wobei ein Hydraulikzylinder am ersten Wagenkasten und ein weiterer am zweiten Wagenkasten angeordnet sind und so auf das erste Gelenk einwirken, dass eine Bewegung des ersten Gelenks in Querrichtung zum ersten Wagenkasten zu einer Bewegung des ersten Gelenks in Querrichtung des zweiten Wagenkastens in entgegengesetzter Richtung und insbesondere um denselben Betrag führt.

Weitergebildet ist die erste Kopplungseinrichtung derart ausgebildet, dass ein Verhältnis aus erstem zum zweiten Betrag zwischen 0,25 und 4, insbesondere zwischen 0,8 und 1,25 liegt. Insbesondere ist die erste Kopplungseinrichtung derart ausgebildet, dass der erste Betrag gleich dem zweiten Betrag ist.

Gemäß einer weiteren Weiterbildung weist das Gelenkfahrzeug wenigstens einen weiteren, dritten Wagenkasten auf, welcher mit dem ersten Wagenkasten über ein zweites Gelenk gekuppelt ist, wobei das zweite Gelenk zwischen dem ersten und dem dritten Wagenkasten angeordnet und zumindest zur Ausführung einer Drehbewegung des ersten und des dritten Wagenkastens um eine Hochachse des Gelenkfahrzeugs und zur Übertragung von Antriebs- und Bremskräften zwischen dem ersten und dem dritten Wagenkasten geeignet ausgebildet ist, dadurch gekennzeichnet, dass das zweite Gelenk derart beweglich mit dem ersten Wagenkasten verbunden ist, dass der Drehpunkt der Drehbewegung des ersten und des dritten Wagenkastens um die Hochachse des Gelenkfahrzeugs quer zur Längsachse des ersten Wagenkastens bewegbar ist und dadurch neben der Drehbewegung um die Hochachse auch Bewegungen des ersten und des dritten Wagenkastens zueinander in Richtung der Fahrzeugquerachse ermöglicht. Das zweite Gelenk weist dieselbe Funktion zwischen dem ersten und dem dritten Wagenkasten auf, wie das erste Gelenk zwischen dem ersten und dem zweiten Wagenkasten. Es kann auch identisch ausgebildet sein.

Weitergebildet kann das Gelenkfahrzeug eine zweite Kopplungseinrichtung umfassen, welche derart ausgebildet ist, dass eine Bewegung des Drehpunkts der Drehbewegung des ersten und des zweiten Wagenkastens um die Hochachse des Gelenkfahrzeugs quer zum ersten Wagenkasten um einen ersten Betrag zu einer Bewegung des Drehpunkts der Drehbewegung des ersten und des dritten Wagenkastens um die Hochachse des Gelenkfahrzeugs quer zum dritten Wagenkasten um einen vorgegebenen, vom ersten Betrag abhängigen, zweiten Betrag führt. Die Kopplungseinrichtung kann dabei am ersten Wagenkasten angeordnet sein. Auch hier umfasst die Kopplungseinrichtung wenigstens eine Stellvorrichtung.

Weitergebildet ist das erste Gelenk derart ausgebildet und so zwischen dem ersten und dem zweiten Wagenkasten angeordnet, dass ein Verhältnis der Abstände des Drehpunkts der Drehbewegung des ersten und des zweiten Wagenkastens um die Hochachse des Gelenkfahrzeugs zum ersten und zum zweiten Wagenkasten in einem Intervall von 0,25 bis 4, insbesondere in einem Intervall von 0,8 bis 1,25, liegt.

Analog kann das zweite Gelenk derart ausgebildet und so zwischen dem ersten und dem dritten Wagenkasten angeordnet sein, dass ein Verhältnis der Abstände des Drehpunkts der Drehbewegung des ersten und des dritten Wagenkastens um die Hochachse des Gelenkfahrzeugs zum ersten und zum dritten Wagenkasten in einem Intervall von 0,25 bis 4, insbesondere in einem Intervall von 0,8 bis 1,25, liegt.

Die Abstände des jeweiligen Drehpunkts bemessen sich zu einer Stirnseite des jeweiligen Wagenkastens, mit welcher der Wagenkasten endet. Eventuelle Anbauteile, wie etwa eine Konsole, mit welcher das erste Gelenk mit dem Wagenkasten verbunden ist, sind nicht Teil des Wagenkastens. Herkömmliche Wagenkästen umfassen Längs-, Hoch- und Querträger, welche einen Innenraum des Wagenkastens umgeben. Das stirnseitige Ende eines Wagenkastens ist durch die Außenhaut des Wagenkastens festgelegt, welche noch zum Umhüllen des Innenraums des Wagenkastens bestimmt ist.

Weitergebildet betragen der Abstand des Drehpunkts der Drehbewegung des ersten und des zweiten Wagenkastens um die Hochachse des Gelenkfahrzeugs zum ersten Wagenkasten, sowie der Abstand des Drehpunkts der Drehbewegung des ersten und des dritten Wagenkastens um die Hochachse des Gelenkfahrzeugs zum ersten Wagenkasten mindestens 200 mm, insbesondere mindestens 300 mm. Zum zweiten, respektive zum dritten Wagenkasten, beträgt der Abstand des Drehpunkts der Drehbewegung des ersten und des zweiten Wagenkastens um die Hochachse des Gelenkfahrzeugs, respektive der Abstand des Drehpunkts der Drehbewegung des ersten und des dritten Wagenkastens um die Hochachse des Gelenkfahrzeugs, mindestens 200 mm, insbesondere mindestens 400 mm. Höchstens betragen die genannten Abstände 1000 mm, insbesondere höchstens 500 mm.

Ist ein drittes Gelenk vorgesehen, zur schwenkbaren Verbindung des ersten Gelenks mit dem ersten Wagenkasten, so beträgt der Abstand des Drehpunkts der Drehbewegung des ersten Gelenks und des ersten Wagenkastens um die Hochachse des Gelenkfahrzeugs zum ersten Wagenkasten höchstens 1000 mm, insbesondere höchstens 500 mm. Der Abstand des Drehpunkts der Drehbewegung des dritten Gelenks und des ersten Wagenkastens um die Hochachse des Gelenkfahrzeugs zum ersten Wagenkasten ist dabei insbesondere deutlich kleiner als der Abstand des Drehpunkts der Drehbewegung des ersten Gelenks und des ersten Wagenkastens um die Hochachse des Gelenkfahrzeugs zum ersten Wagenkasten.

In einer weiteren Weiterbildung des erfindungsgemäßen Gelenkfahrzeugs ist das erste Gelenk derart ausgebildet und beweglich mit dem ersten Wagenkasten verbunden, dass der Abstand des ersten Wagenkastens zum Drehpunkt der Drehbewegung des ersten und des zweiten Wagenkastens um die Hochachse des Gelenkfahrzeugs in Richtung der Längsachse des ersten Wagenkastens bei einer Bewegung des Drehpunkts der Drehbewegung des ersten und des zweiten Wagenkastens um die Hochachse des Gelenkfahrzeugs quer zur Längsachse des ersten Wagenkastens im Wesentlichen unverändert ist.

Im Wesentlichen unverändert bedeutet hier insbesondere, dass ein Verhältnis aus einem Betrag der Bewegung des Drehpunkts parallel zur Längsachse des ersten Wagenkastens zum Betrag der Bewegung des Drehpunkts quer zur Längsachse kleiner 0,3, insbesondere kleiner 0,1 ist. Bevorzugt ist dieses Verhältnis Null. Dies ist dann der Fall, wenn der Drehpunkt ausschließlich quer zur Längsachse des ersten Wagenkastens verschoben wird.

Weitergebildet sind der erste und der zweite Wagenkasten jeweils auf einem Fahrwerk, insbesondere einem Drehgestell, abgestützt, welches insbesondere jeweils mittig unter dem jeweiligen Wagenkasten angeordnet ist. Das Gelenkfahrzeug kann zwei, drei, vier oder mehr Wagenkästen umfassen. Handelt es sich um einen sogenannten Kurzgelenkwagen ist jeder Wagenkasten auf jeweils einem, insbesondere mittig unter dem Wagenkasten angeordneten Drehgestell abgestützt. Als Kurzgelenkwagen werden Fahrzeuge bezeichnet, bei denen pro Wagenteil ein Drehgestell benötigt wird. Bei diesen Wagen entfällt die Gelenkansteuerung meist ganz, das Gelenk stellt sich vielmehr selbsttätig durch die Rückstellkräfte der Sekundärfedern ein und es sind auch nur geringe Stützlasten vom ersten Gelenk zu übertragen. Das Gelenkfahrzeug ist weitergebildet ein Niederflurfahrzeug des Personennahverkehrs.

Die Ausdrehwinkel der Fahrwerke bzw. Drehgestelle eines erfindungsgemäßen Gelenkfahrzeugs sind üblicherweise begrenzt auf höchstens 8°, insbesondere betragen sie höchstens 4,5°.

Wie bereits ausgeführt, handelt es sich beim ersten Gelenk insbesondere um ein sogenanntes unteres Gelenk. Das Gelenkfahrzeug kann des Weiteren auch ein oberes Gelenk zwischen dem ersten und dem zweiten Wagenkasten aufweisen. Es sind viele Ausbildungsformen des oberen Gelenks denkbar.

Um einen Nickfreiheitsgrad des ersten und des zweiten Wagenkastens zueinander zu blockieren, kann im oberen Bereich der Wagenkästen beispielsweise eine Koppelstange eingesetzt sein.

In einer Ausgestaltung des erfindungsgemäßen Gelenkfahrzeugs ist ein sphärisches Gelenk im oberen Bereich des ersten und zweiten Wagenkastens zwischen den Wagenkästen angeordnet. Dies kann zur Vertikalkraftabstützung dienen. Das erste Gelenk ist ebenfalls als sphärisches Gelenk und somit Nick- und Wankweich ausgebildet. Dann sind Wankbewegungen der Wagenkästen zueinander nur noch gleichzeitig mit einer Querverschiebung der Wagenkästen zueinander ermöglicht. Die beiden Bewegungen sind miteinander gekoppelt. Die Gelenke sind insbesondere so angeordnet, dass ihre Gelenkachsen zusammenfallen.

Darüber hinaus können die Schwenk-, Nick- und/oder Wankbeweglichkeit des ersten und des zweiten Wagenkastens zueinander, beispielsweise mittels geeignet ausgebildeten und angeordneten Endanschlägen, begrenzt sein.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt ein Einzelgelenkfahrzeug des Stands der Technik in einem Kurzbogen,
- Fig. 2: zeigt ein Einzelgelenkfahrzeug des Stands der Technik in einem C-Bogen,
- Fig. 3: zeigt ein Einzelgelenkfahrzeug des Stands der Technik in einem S-Bogen,
- Fig. 4: zeigt die prinzipielle Wirkungsweise der Erfindung,
- Fig. 5: zeigt eine erste Ausführungsform des erfindungsgemäßen Gelenkfahrzeugs schematisch in der Draufsicht,
- Fig. 6: zeigt schematisch eine weitere Ausführungsform der Erfindung,
- Fig. 7: zeigt schematisch eine weitere Ausführungsform der Erfindung,
- Fig. 8: zeigt schematisch eine weitere Ausführungsform der Erfindung,
- Fig. 9: zeigt schematisch eine weitere Ausführungsform der Erfindung,
- Fig. 10: zeigt schematisch eine weitere Ausführungsform der Erfindung,
- Fig. 11: zeigt schematisch eine weitere Ausführungsform der Erfindung,
- Fig. 12: zeigt schematisch eine weitere Ausführungsform der Erfindung,
- Fig. 13: zeigt schematisch eine weitere Ausführungsform der Erfindung,
- Fig. 14: zeigt schematisch eine weitere Ausführungsform der Erfindung,
- Fig. 15: zeigt schematisch eine weitere Ausführungsform der Erfindung,
- Fig. 16: zeigt schematisch eine weitere Ausführungsform der Erfindung,
- Fig. 17: zeigt schematisch eine weitere Ausführungsform der Erfindung,
- Fig. 18: zeigt schematisch eine weitere Ausführungsform der Erfindung,
- Fig. 19: zeigt schematisch eine weitere Ausführungsform der Erfindung,
- Fig. 20: zeigt schematisch eine weitere Ausführungsform der Erfindung,
- Fig. 21: zeigt schematisch eine weitere Ausführungsform der Erfindung,
- Fig. 22: zeigt schematisch eine weitere Ausführungsform der Erfindung,
- Fig. 23: zeigt schematisch eine weitere Ausführungsform der Erfindung,
- Fig. 24: zeigt schematisch eine weitere Ausführungsform der Erfindung.

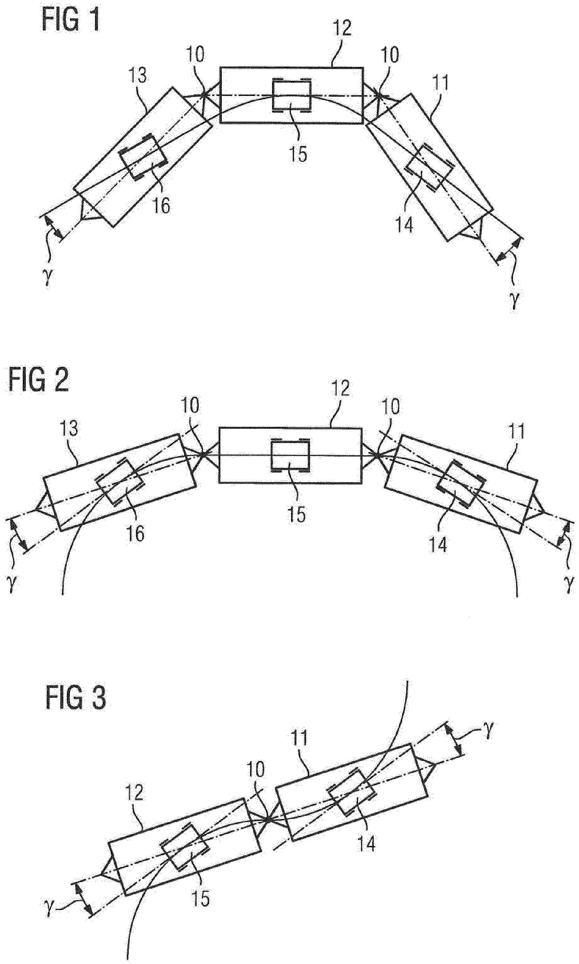

In Fig. 1 ist ein 3-teiliges Einzelgelenkfahrzeug des Stands der Technik in einem Kurz-Bogen dargestellt. Das Fahrzeug weist drei Wagenkästen 11, 12, 13 auf, welche jeweils auf einem Drehgestell 14, 15, 16 abgestützt sind. Die Wagenkästen 11 und 12 sind um die in die Zeichenebene weisende Hochachse des Fahrzeugs gedreht oder geschwenkt. Der Drehpunkt der Drehbewegung Wagenkästen 11 und 12 um die Hochachse des Gelenkfahrzeugs ist mit 10 gekennzeichnet. Die Längsachse des Fahrwerks 15 des mittleren Wagenkastens 12 fällt dabei mit der Längsachse des mittleren Wagenkastens 12 zusammen. Die Drehgestelle 14 und 16 des vorderen und hinteren Wagenkastens 11 und 13 hingegen weisen jeweils einen großen Ausdrehwinkel γ zu den jeweiligen Längsachsen der Wagenkästen 11 und 13 auf. Die beiden Ausdrehwinkel γ sind in der hier gezeichneten Extremstellung gleich groß.

Auch zum Befahren eines C-Bogens, wie in Fig. 2 veranschaulicht, sind vergrößerte Ausdrehwinkel γ der Fahrwerke 14 und 16 der stirnseitigen Wagenkästen 11 und 13 des 3-teiligen Einzelgelenkfahrzeugs vorgesehen.

Einzelgelenkfahrzeuge mit vergrößerten Ausdrehwinkeln können zwar engere Gleistrassierungen befahren, als sie von üblichen Einzelgelenkfahrzeugen befahrbar sind, jedoch wird dies erkauft mit einer verringerten niederflurigen Durchgangsbreite im Fahrwerksbereich. Ein unbegrenztes Erhöhen der Ausdrehwinkel ist ebenfalls nicht möglich, so dass auch für diese Fahrzeuge nicht befahrbare, noch engere Gleistrassierungen existieren.

Anstelle von 3-teiligen Fahrzeugen werden auch 2- oder 4-teilige Fahrzeuge eingesetzt. Die 4-teiligen Fahrzeuge können dabei prinzipiell aus zwei 2-teiligen Fahrzeugen zusammengesetzt sein, welche mittels vollständig nickoffener Doppelgelenke (ähnlich einer Kupplung, aber mit niederflurigem Übergang darüber) verbunden sind. Dabei verringern sich die Ausdrehwinkel in C- und Kurzbögen. Nachteilig ist, dass die gewünschte Fahrzeuglänge nicht eingehalten werden kann und, dass enge S-Bögen nicht befahrbar sind, da die Ausdrehwinkel zu groß würden, wie in Fig. 3 skizziert. Die in der Extremstellung gleich großen Ausdrehwinkel γ der Fahrwerke 14 und 15 der beiden Wagenkästen 11 und 12 übersteigen ein vorgegebenes Höchstmaß.

Alternativen zum Befahren von engen Gleistrassierungen stellen Multigelenkfahrzeuge dar, deren Nachteile bezüglich ihres dynamischen Fahrtverhaltens, Achs- und Gelenklasten, sowie der hohen Anzahl an Wagenkästen und Gelenken weithin bekannt sind. Andererseits könnte auf die 100%-Niederflurigkeit von Einzelgelenkfahrzeugen verzichtet werden oder die Gleisinfrastruktur kostenintensiv umgebaut werden.

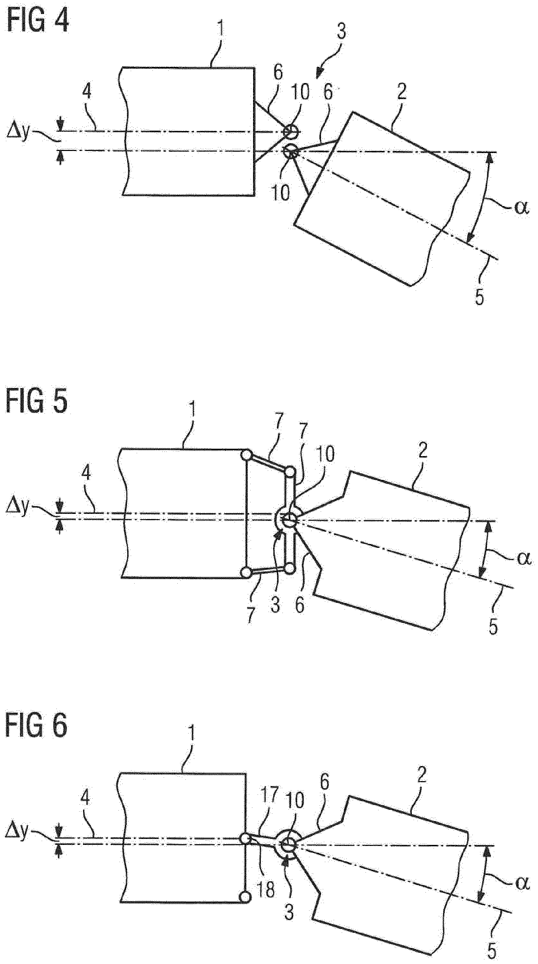

Erfindungsgemäß wird dieses Problem dadurch gelöst, dass das erste Gelenk 3 zwischen einem ersten und einem zweiten Wagenkasten 1 und 2 eines Gelenkfahrzeugs, insbesondere eines Einzelgelenkfahrzeugs, insbesondere eines Niederflur-Einzelgelenkfahrzeugs, zumindest in Querrichtung des ersten Wagenkastens 1 beweglich mit dem ersten Wagenkasten 1 verbunden ist. Dies ist in Fig. 4 schematisch dargestellt.

Ein erfindungsgemäßes Gelenkfahrzeug umfasst wenigstens zwei Wagenkästen 1 und 2, welche über ein erstes Gelenk 3 miteinander gekuppelt sind. Es kann auch einen oder mehrere weitere Wagenkästen umfassen und somit 3- oder mehrteilig ausgebildet sein.

Das erste Gelenk 3 ist zwischen dem ersten und dem zweiten Wagenkasten 1, 2 angeordnet und zumindest zur Ausführung einer Drehbewegung des ersten und des zweiten Wagenkastens 1, 2 um eine Hochachse des Gelenkfahrzeugs und zur Übertragung von Antriebs- und Bremskräften zwischen dem ersten und dem zweiten Wagenkasten 1, 2 geeignet ausgebildet. Die Hochachse steht in Fig. 4 senkrecht zur Zeichenebene und wird gelegentlich als z-Achse bezeichnet. Eine Drehbewegung des ersten und des zweiten Wagenkastens 1, 2 um die Hochachse führt zu einem Schwenkwinkel α des ersten und zweiten Wagenkastens 1 und 2 zueinander und damit zu einem Winkel α zwischen einer Längsachse 4 des ersten Wagenkastens und einer Längsachse 5 des zweiten Wagenkastens 2. Die Längsachse 4 des ersten Wagenkastens 1 legt hier die x-Achse des Koordinatensystems fest. Die Achse senkrecht auf die Längsachse und senkrecht auf die Hochachse wird dann als Quer- oder y-Achse bezeichnet. Der Drehpunkt der Drehbewegung des ersten und des zweiten Wagenkastens 1 und 2 um die Hochachse des Gelenkfahrzeugs ist auch hier mit dem Bezugszeichen 10 versehen. Das erste Gelenk 3 ist hier als einfaches Drehgelenk oder als sphärisches Gelenk ausgebildet, so dass der Drehpunkt 10 der Drehbewegung des ersten und des zweiten Wagenkastens 1 und 2 um die Hochachse des Gelenkfahrzeugs mit der Gelenkachse des ersten Gelenks 3 zusammenfällt. Das erste Gelenk 3 ist über Konsolen 6 an den jeweiligen Stirnseiten der Wagenkästen 1 und 2 befestigt.

Nun ist das erste Gelenk 3 derart beweglich mit dem ersten Wagenkasten 1 verbunden, dass der Drehpunkt der Drehbewegung des ersten und des zweiten Wagenkastens 1 und 2 um die Hochachse des Gelenkfahrzeugs quer zur Längsachse des ersten Wagenkastens 1 bewegbar ist.

Dadurch sind neben den Schwenkbewegungen (mit dem Winkel a) um die Hochachse auch Bewegungen (um den Betrag Δy) des ersten und des zweiten Wagenkastens 1 und 2 zueinander in Richtung der Fahrzeugquerachse möglich. Bewegungen in Richtung der Fahrzeugquerachse des ersten und des zweiten Wagenkastens 1 und 2 gehen mit einem Versatz ihrer Längsachsen einher. Bei einer solchen Bewegung auf gerader Strecke wären die Längsachsen 4 und 5 der beiden Wagenkästen 1 und 2 um den Betrag der Querbewegung parallel zueinander versetzt. Daher kann auch von einer Verschiebung der beiden Wagenkästen 1 und 2 bzw. ihrer Wagenkasten-Untergestelle sowie ihrer zugehörigen Drehgestelle zueinander gesprochen werden, die nicht zu verwechseln ist mit einem Verwinden der Wagenkästen 1 und 2 zueinander beim Wanken (keine Querverschiebung der Wagenkasten-Untergestelle sowie der zugehörigen Drehgestelle zueinander).

Durch die querverschiebliche Ausführung des Einfachgelenks können enge Terrassierungen befahren werden, ohne dass die Durchgangsbreite im Fahrwerksbereich eingeschränkt ist. Darüber hinaus ermöglicht die Querverschieblichkeit einen reduzierten Lichtraumbedarf beim Befahren von Krümmungswechseln, wie z.B. Bogeneinfahrten oder S-Bögen. Durch die Querverschieblichkeit lässt sich das Ausschwenken der über Einzelgelenke gekoppelten Wagenkästen im geraden Gleis vor dem Krümmungswechsel sowie im Bereich des Krümmungswechsels ganz vermeiden oder zumindest deutlich verringern.

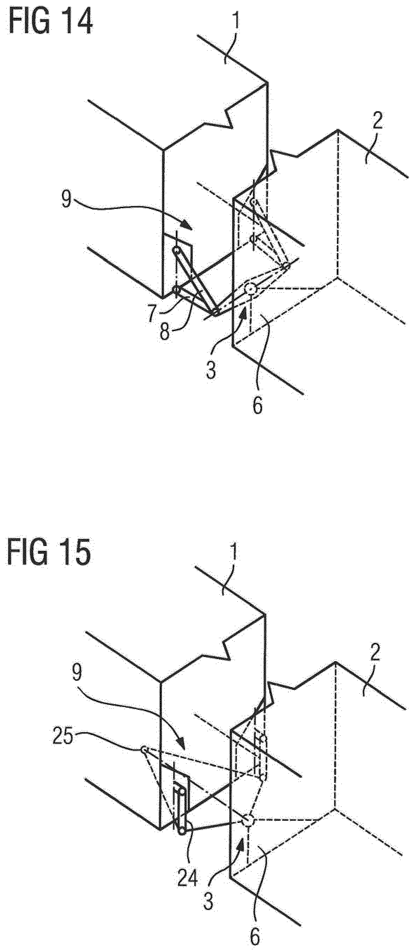

Fig. 5 zeigt nun eine erste Ausführungsform der Erfindung schematisch in der Draufsicht. In Fig. 14 ist diese Ausführungsform nochmals 3-Dimensional skizziert.

Es sind zwei Wagenkästen 1 und 2 eines Gelenkfahrzeugs zu sehen, welche jeweils auf einem Fahrwerk oder Drehgestell abgestützt sind. Die Wagenkästen 1 und 2 sind über ein erstes Gelenk 3 miteinander verbunden, welches erste Gelenk 3 bei Kurvenfahrt Drehbewegungen der Wagenkästen 1 und 2 um die Hochachse zulassen. Allgemein kann das Gelenkfahrzeug auch drei oder mehrere Wagenkästen umfassen, von denen wenigstens zwei Wagenkästen jeweils auf einem Drehgestell oder Fahrwerk abgestützt sind, wobei die Gelenke zwischen den Wagenkästen bei Kurvenfahrt Drehbewegungen der Wagenkästen um die Hochachse zulassen. Es handelt sich also insbesondere um ein Einzelgelenkfahrzeug, insbesondere um ein Niederflur-Kurzgelenkwagen.

Das erste Gelenk 3 ist als sphärisches Gelenk ausgebildet und unter einem Wagenübergang im Niederflurfahrzeug angeordnet. Es handelt sich somit um ein sogenanntes unteres Gelenk. Mit dem zweiten Wagenkasten 2 ist das erste Gelenk 3 über eine Konsole 6 starr verbunden. Die Verbindung des ersten Gelenks 3 mit dem ersten Wagenkasten 1, so dass es zumindest in Querrichtung des ersten Wagenkastens beweglich ist, ist hier durch ein Viergelenkgetriebe 7 realisiert. Dargestellt ist eine Verschiebung des Gelenk- und gleichzeitig Drehpunkts 10 um Δy quer zur Längsachse 4 des ersten Wagenkastens 1. Gleichzeitig weisen die Längsachsen 4 und 5 der Wagenkästen 1 und 2 einen Schwenkwinkel α zueinander auf.

Die Anordnung des Viergelenkgetriebes 7 weist einen für Niederflurfahrzeuge wichtigen niedrigen vertikalen Platzbedarf auf und ermöglicht eine reibungsarme Ausführung. Sie ermöglicht mit dem als sphärischem Gelenk 3 ausgebildeten ersten Gelenk 3 und den zur Vertikalabstützung dienenden Lenkern 8, welche im Bauraumbereich 9 der Balgtrapeze angeordnet sind, welche ihrerseits zur Spaltabdeckung an der begehbaren Drehscheibe im Bereich des Wagenübergangs dienen, eine nickoffene oder nicksteife Ausführung, je nach Vorhandensein und Ausführung eines oberen Gelenks. Alternativ kann das erste Gelenk 3 aus als Kardangelenk ausgebildet sein. Eine Variante besteht darin, das erste Gelenk 3 als nicksteifen Drehkranz auszugestalten, um keine Kräfte im oberen Bereich der Wagenkästen übertragen zu müssen. Nickoffene und nicksteife Gelenke werden für die statisch bestimmte Lagerung eines mehrgliedrigen Schienenfahrzeugs benötigt.

Durch einen seitlichen Versatz der oberen Anlenkpunkte der Lenker 8 oder durch eine elastische Ausführung der Gelenkpunkte lässt sich eine vorteilhafte Zentrierwirkung erzielen.

Bei einer Querverschiebung des ersten Gelenks 3 aus einer Ruhelage heraus, in welcher der Drehpunkt 10 auf der Längsachse 4 des ersten Wagenkastens 1 liegt, kommt es hier bauartbedingt auch zu einer Verschiebung des ersten Gelenks 3 zum ersten Wagenkasten 1 hin bzw. von diesem weg parallel zu seiner Längsachse 4. Diese ist jedoch zu vernachlässigen. Der Abstand des Drehpunkts 10 zum ersten und zum zweiten Wagenkasten 1 und 2 bleibt also im Wesentlichen gleich.

Auch in der Ausführungsform gemäß Fig. 6 weist das Gelenkfahrzeug wenigstens zwei miteinander gekoppelte Wagenkästen 1 und 2 auf, welche über ein erstes, unteres Gelenk 3 derart miteinander gekuppelt sind, dass Antriebs- und Bremskräfte in axialer Richtung über das erste Gelenk 3 von einem auf den anderen Wagenkasten übertragbar sind und gegebenenfalls Stützlasten in Fahrzeughochachse übertragen werden können.

Das erste Gelenk 3 ist mittels einer Koppelstange 17 am ersten Wagenkasten 1 angeordnet. Die Koppelstange 17 ist ihrerseits via ein drittes Gelenk 18 gelenkig mit dem ersten Wagenkasten 1 verbunden. Das dritte Gelenk 18 ermöglicht eine Drehbewegung des ersten Gelenks 3 und des ersten Wagenkastens 1 um die Hochachse des Gelenkfahrzeugs. Es handelt sich jedoch nicht um ein Doppelgelenk, da das dritte Gelenk 18 ausschließlich zum Querversatz der Wagenkästen 1 und 2 zueinander beiträgt. Abweichend von einem Doppelgelenk besteht hier eine klare Funktionstrennung zwischen den Hauptbewegungen Schwenken der Wagenkästen 1 und 2 zueinander und Querverschiebung der Wagenkästen 1 und 2 zueinander.

Erreicht wird dies beispielsweise dadurch, dass die Drehbewegung des dritten Gelenks 18 erst bei einer auf das Gelenk wirkenden Kraft größer einer vorgegebenen Kraft größer Null ermöglicht wird. Die Drehbewegung des dritten Gelenks 18 wird durch eine vorgegebene Kraft blockiert. Die vorgegebene Kraft ist beispielsweise größer als ein Reibmoment im ersten Gelenk 3. Die Kraft kann beispielsweise mittels eines Feder-/Dämpfersystems mechanisch, elektrisch oder hydraulisch aufgebracht werden.

Hier ist das erste Gelenk 3 so beweglich am ersten Wagenkasten 1 angeordnet und mit diesem verbunden, dass beim Schwenken des ersten Gelenks 3 zum ersten Wagenkastens 1 der Abstand des Drehpunkts 10 zum Schnittpunkt der Längsachse 4 mit dem stirnseitigen Ende des ersten Wagenkastens 1 konstant bleibt. Mit der Länge der Koppelstange 17 verändert sich der Radius, auf welchem das erste Gelenk zum ersten Wagenkasten 1 geschwenkt wird. Bei der Wahl einer langen Koppelstange 17 und nur sehr kleinen Schwenkwinkeln der Koppelstange bleibt dann auch der Abstand des Drehpunkts 10 zum ersten Wagenkasten 1 im Wesentlichen gleich.

Die Anordnung mit Koppelstange weist einen für Niederflurfahrzeuge niedrigen vertikalen Platzbedarf auf. Sie ermöglicht eine sehr kompakte Bauweise mit Einleitung der Längskräfte im Bereich eines zentralen Langträgers der jeweiligen Wagenkastenstruktur.

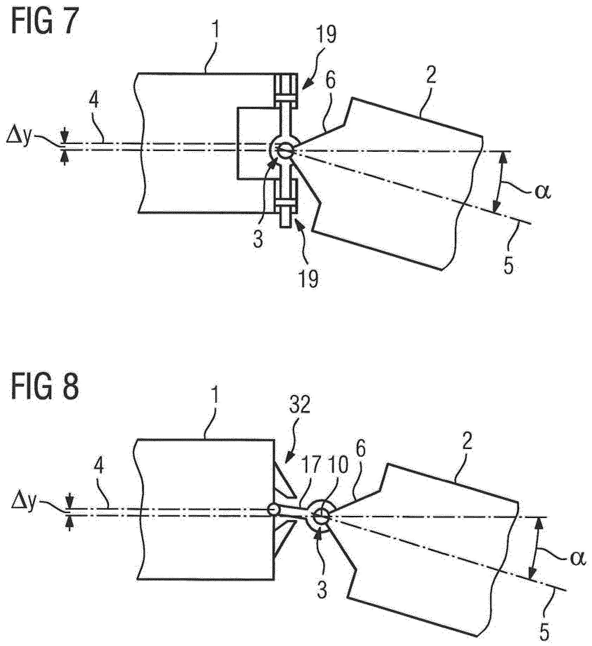

Fig. 7 zeigt nun ein mittels Schubgelenken 19 am ersten Wagenkastens 1 angeordneten und zu diesem verschiebbares erstes Gelenk 3. Es ist in Fahrzeugquerrichtung verschiebbar an den ersten Wagenkasten 1 angeschlossen.

Hier kann von einer echten Querverschiebung des ersten Gelenks 3 gesprochen werden. Es ist so beweglich am ersten Wagenkasten 1 angeordnet und mit diesem verbunden, dass der Abstand des Drehpunkts 10 zum ersten Wagenkasten 1 gleich bleibt. Da das erste Gelenk 3 starr mittels der Konsole 6 am zweiten Wagenkasten 2 angeordnet ist, bleibt zusätzlich auch der Abstand des ersten Gelenks 3 zum zweiten Wagenkasten 2 gleich.

Das erste Gelenk ist im Wesentlichen mittig zwischen beiden Wagenkästen 1 und 2 angeordnet. Es kann aber auch leicht aus der Mitte heraus versetzt sein. Beispielsweise beträgt der Abstand des ersten Gelenks zum ersten Wagenkasten 400 mm und zum zweiten Wagenkasten nur 300 mm. Somit betrüge ein Verhältnis von Abständen des Drehpunkts des ersten Gelenks zu den sich gegenüberliegenden Stirnseiten der Wagenkästen 1,33 oder 0,75.

Auch die Anordnung mittels Schubgelenken ermöglicht eine kompakte Bauweise mit einer Vertikalabstützung des querverschieblichen ersten Gelenks ohne zusätzliche Bauteile. Vorteilhaft können als Schubgelenke Hydraulikzylinder verwendet werden, welche fest mit der Rohbaustruktur verbunden sind. Sie ermöglichen gleichzeitig eine einfache Blockierbarkeit, Koppelbarkeit oder Ansteuerbarkeit der Querverschieblichkeit. Die Hydraulikzylinder sind bevorzugt als Plungerzylinder ausgeführt. Dadurch können größere Kolbenstangendurchmesser verwendet werden zur besseren Abstützung von Längs- und Vertikalkräften. Da Plungerzylinder nur über eine Führungsfläche verfügen, können die Reibanteile reduziert werden.

Analog zu Fig. 6 ist in Fig. 8 das erste Gelenk 3 über eine Koppelstange 17 mit dem ersten Wagenkasten 1 verbunden. Darüber hinaus sind Endanschläge 32 zur Begrenzung der Beweglichkeit des Drehpunkts 10 der Drehbewegung des ersten und des zweiten Wagenkastens 1 und 2 um die Hochachse des Gelenkfahrzeugs quer zur Längsachse des ersten Wagenkastens 1 aus einer vorgegebenen Ruhelage heraus vorgesehen. Diese sind hier fest und unbeweglich installiert. Sie können aus einem elastischen oder wenig elastischen Werkstoff gefertigt sein.

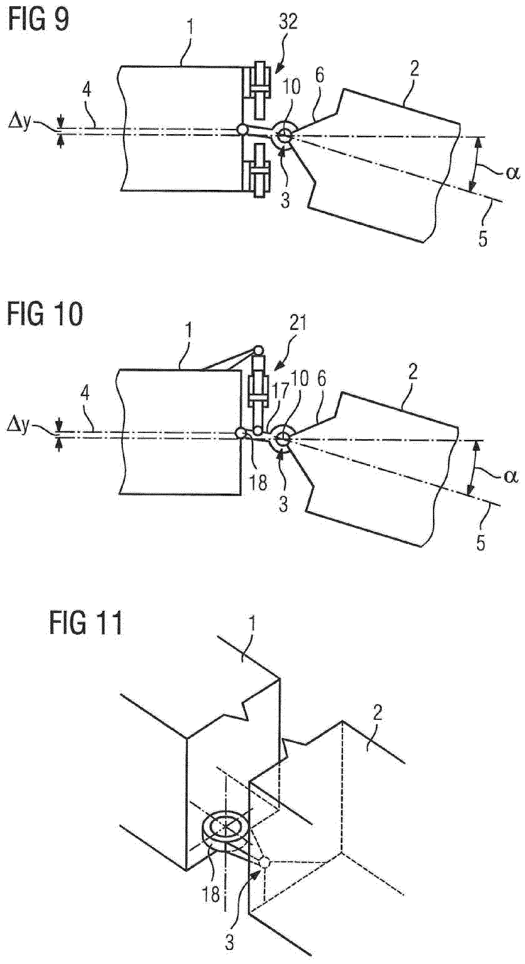

Ähnlich verhält es sich mit dem Ausgestaltungsbeispiel gemäß Fig. 9. Hier sind die Endanschläge 32 jedoch verstellbar ausgeführt. Für unterschiedliche Situationen kann die jeweils erforderliche Querverschieblichkeit eingestellt werden. Hydraulikzylinder ermöglichen eine preiswerte und funktionssichere Ausführung der Verstellbarkeit, Blockierbarkeit und aktiven Ansteuerbarkeit.

Fig. 10 offenbart ein erstes Gelenk 3 zur Übertragung von Kräften in Längsrichtung und gegebenenfalls in Richtung der Fahrzeughochachse zwischen beiden Wagenkästen 1 und 2, welches wiederum zwischen beiden Wagenkästen 1 und 2 angeordnet ist, zur Ausführung zumindest einer Schwenkbewegung um eine Hochachse der Wagenkästen 1 und 2 zueinander. Das erste Gelenk 3 ist ausschließlich mit dem ersten Wagenkasten 1 derart verbunden ist, dass eine Querverschiebung der Wagenkästen 1 und 2 zueinander möglich ist, wobei die Verbindung derart ausgebildet ist, dass eine Querverschiebung bei einer vorgegebenen Kraft größer Null möglich ist.

Dazu ist ein Rückstellelement 21 vorgesehen, welches einer Bewegung des Drehpunkts 10 der Drehbewegung des ersten und des zweiten Wagenkastens 1 und 2 um die Hochachse des Gelenkfahrzeugs quer zur Längsachse 4 des ersten Wagenkastens 1 entgegenwirkt, indem es eine vorgegebene Kraft größer Null auf das erste Gelenk 3, respektive hier auf die Verbindung des ersten Gelenks 3 mit dem ersten Wagenkasten 1 als Teil des ersten Gelenks 3, aufbringt. Die Verbindung des ersten Gelenks 3 mit dem ersten Wagenkasten 1 erfolgt wiederum per Koppelstange 17 und drittem Gelenk 18 am ersten Wagenkasten 1. Somit trägt das dritte Gelenk 18 bei Kurvenfahrt nicht zum Schwenken der Wagenkästen 1 und 2 zueinander bei, sondern nur zum Verschieben der Wagenkästen 1 und 2 zueinander in Fahrzeugquerrichtung. Das Rückstellelement 21 wirkt der Bewegung des ersten Gelenks 3 aus der Ruhelage heraus entgegen. Es ist hier als Hydraulikzylinder ausgebildet. Somit kann es nicht nur als Rückstellelement 21 dienen, sondern darüber hinaus zur aktiven Steuerung der Querverschiebung der Wagenkästen 1 und 2 zueinander als Stellvorrichtung eingesetzt werden. In diesem Ausgestaltungsbeispiel sind das Rückstellelement 21 und die Stellvorrichtung identisch. In der Ruhelage sind die Wagenkästen 1 und 2 frei von einer gegenseitigen Querverschiebung und ihre Längsachsen 4 und 5 fallen zusammen oder schneiden sich im Drehpunkt 10 der Drehbewegung des ersten und des zweiten Wagenkastens 1 und 2 um die Hochachse des Gelenkfahrzeugs.

Neben der Funktion als Stellvorrichtung und als Rückstellelement 21 kann der Hydraulikzylinder auch die Bewegung des Drehpunkts 10 der Drehbewegung des ersten und des zweiten Wagenkastens 1 und 2 um die Hochachse des Gelenkfahrzeugs quer zur Längsachse 4 des ersten Wagenkastens 1 vollständig blockieren.

Auch hier sind sowohl der erste als auch der zweite Wagenkasten 1 und 2 jeweils auf einem, insbesondere mittigen, Drehgestell abgestützt. Das erste Gelenk 3 ist im unteren Teil der Wagenkästen angeordnet.

In Fig. 11 ist das erste Gelenk 3 als sphärisches Gelenk ausgeführt und das dritte Gelenk 18 ist als Drehkranz ausgebildet. Das erste Gelenk 3 ermöglicht somit einen Wankfreiheitsgrad der Gelenkverbindung um Gleisverwindungen aufzunehmen und so die Sicherheit gegen Entgleisen zu erhöhen. Auch die Nickfreiheit ist mit der sphärischen Ausführung des ersten Gelenkes 3 gegeben. Das dritte Gelenk 18 ist hingegen wanksteif und nicksteif.

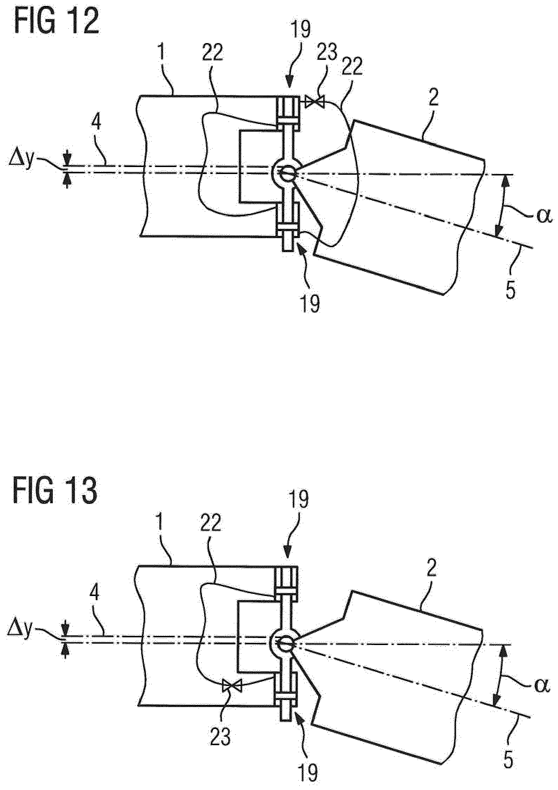

Analog zu Fig. 7 ist in Fig. 12 das erste Gelenk 3 mittels Schubgelenken 19 am ersten Wagenkasten 1 angeordnet. Auch hier sind die Schubgelenke als Hydraulikzylinder ausgestaltet, die hier jedoch über Hydraulikleitungen 22 miteinander verbunden und so miteinander gekoppelt sind. Mittels eines schließbaren Ventils 23 sind die Hydraulikzylinder als Schubgelenke 19 blockierbar. Im Unterschied zu Fig. 12 sind in Fig. 13 die Schubgelenke 19 als Plungerzylinder ausgebildet. Die Verstell- und Blockierbarkeit sowie die aktive Steuerbarkeit und somit der Gebrauch der Schubgelenke 19 als Stellvorrichtungen ist bei beiden Ausführungsformen gegeben.

Neben dem Aufbringen einer vorgegebenen Kraft größer Null auf das erste Gelenk 3 so, dass eine Querverschiebung des ersten Gelenks 3 erst beim Überschreiten der vorgegebenen Kraft größer Null möglich ist und somit eine Gegenkraft größer der vorgegebenen Kraft erfordert, kann das Gelenkfahrzeug eine Dämpfung der Querverschiebung aufweisen. Beides zusammen kann in einem Feder-Dämpfer-Element realisiert werden. Auch Hydraulikzylinder sind sowohl zum Aufbringen der vorgegebenen Kraft, als auch zur Dämpfung der Bewegung geeignet.

Durch die Dämpfung lässt sich das dynamische Fahrzeugverhalten, insbesondere die Gelenklasten verbessern. Viskose Dämpfer erlauben über eine geschwindigkeitsproportionale Dämpfung große Verbesserungen. Reibdämpfer lassen sich hingegen preisgünstig und fehlertolerant umsetzen. Reibkräfte können zudem bei plötzlich auftretenden Längskräften, z.B. aufgrund einer Gefahrenbremsung, einem Ausknicken des Fahrzeugs gut entgegen wirken.

Durch eine Federmittenzentrierung entstehen Rückstellkräfte, die das erfindungsgemäße Gelenkfahrzeug gerade ausrichten und eine beschränkte Querkraftübertragung über das erste Gelenk ermöglichen, welche für den Radverschleiß vorteilhaft ist. Darüber hinaus reduziert die Federmittenzentrierung die Ausknickgefahr bei nicht blockierter Querverschieblichkeit.

Die aktive Ansteuerung der Querverschieblichkeit erlaubt es, die Querverschieblichkeit bei mehreren verschiedenen Gleis- und Betriebssituationen zu nutzen. Vorteilhaft können als Führungsgrößen die Fahrwerks-Ausdrehwinkel verwendet werden. Eine elektrohydraulische Ansteuerbarkeit bietet eine deutlich erhöhte Flexibilität in den Steuergesetzen. Eine elektromotorische Ansteuerbarkeit hat den Vorteil eines geringeren Wartungsaufwands aufgrund fehlenden Hydrauliköl.

Durch die Beschränkung der Querverschieblichkeit sind feste Obergrenzen zu definieren, z.B. für den Lichtraumbedarf, sowie eine Begrenzung der Fahrwerksbewegungen im Falle eines Unfalls oder bei der Wartung.

Fig. 15 zeigt ein erstes Gelenk 3 welches über einen unter dem ersten Wagenkasten 1 drehbar um den Drehpunkt 25 gelagerten Dreieckslenker quer zum ersten Wagenkasten 1 mit dem ersten Wagenkasten 1 verbunden ist. Der Dreieckslenker ist mittels zweier näherungsweise vertikal verlaufender Pendelstützen 24 am ersten Wagenkasten 1 vertikal abgestützt. Ist das erste Gelenk 3 als sphärisches Gelenk ausgebildet, weist die Gelenkverbindung als Ganzes die Freiheitsgrade Schwenken, Nicken, Wanken und Querverschieblichkeit auf.

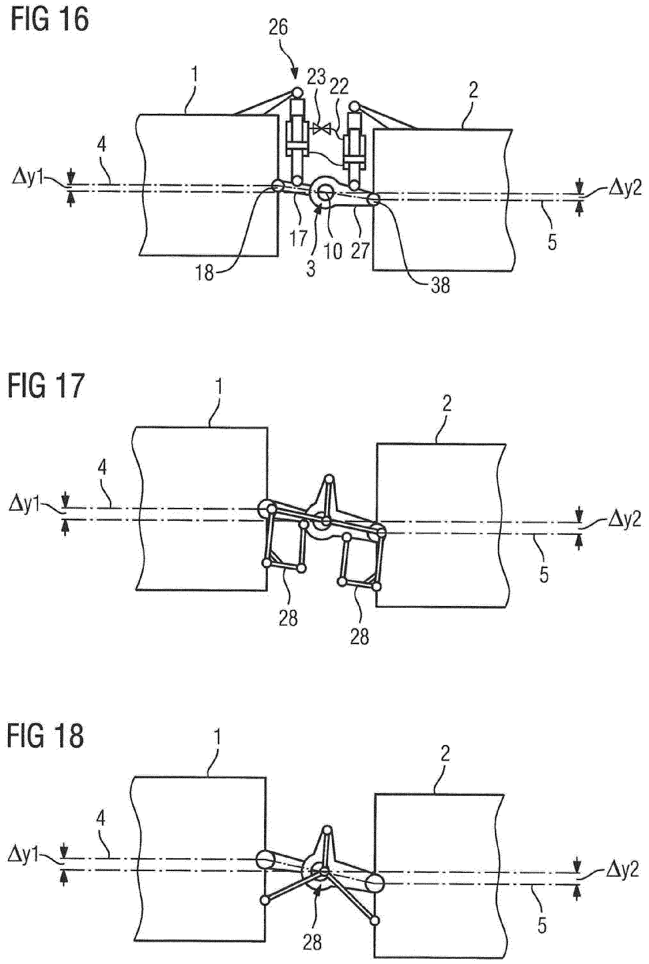

Gemäß Ausführungsform der Fig. 16 ist das erste Gelenk 3 derart beweglich mit dem zweiten Wagenkasten 2 verbunden, dass der Drehpunkt 10 der Drehbewegung des ersten und des zweiten Wagenkastens 1 und 2 um die Hochachse des Gelenkfahrzeugs quer zur Längsachse des zweiten Wagenkastens 2 bewegbar ist, wobei das Gelenkfahrzeug eine erste Kopplungseinrichtung 22, 23 und 26 umfasst, welche hier mit dem ersten und dem zweiten Wagenkasten 1 und 2 verbunden ist und derart ausgebildet ist, dass eine Bewegung des Drehpunkts 10 der Drehbewegung des ersten und des zweiten Wagenkastens 1 und 2 um die Hochachse des Gelenkfahrzeugs quer zum ersten Wangenkasten 1 um einen ersten Betrag Δy1 zu einer Bewegung des Drehpunkts 10 der Drehbewegung des ersten und des zweiten Wagenkastens 1 und 2 um die Hochachse des Gelenkfahrzeugs quer zum zweiten Wagenkasten 2 um einen vorgegebenen, vom ersten Betrag Δy1 abhängigen, zweiten Betrag Δy2 führt.

Die Kopplung erfolgt hier hydraulisch. Die Kopplungseinrichtung umfasst entsprechend zwei Hydraulikzylinder 26 als Stellvorrichtungen, wobei ein Hydraulikzylinder 26 am ersten Wagenkasten 1 und ein weiterer am zweiten Wagenkasten 2 angeordnet sind und so auf das erste Gelenk 3 einwirken, dass eine Bewegung des ersten Gelenks 3 in Querrichtung zum ersten Wagenkasten 1 zu einer Bewegung des ersten Gelenks 3 in Querrichtung des zweiten Wagenkastens 3 in entgegengesetzter Richtung und insbesondere um denselben Betrag führt; Δy1 ist hier also gleich Δy2. Die Hydraulikzylinder 26 sind wiederum per Hydraulikleitungen 22 miteinander verbunden, welche mit wenigstens einem Absperrhahn 23 ausgestattet sind.

Das erste Gelenk 3 ist über ein drittes Gelenk 18 am ersten Wagenkasten 1 und über ein viertes Gelenk 38 am zweiten Wagenkasten 2 angeschlossen. Zwischen drittem und erstem Gelenk 18 und 3 befindet sich eine Koppelstange 17, wobei auch eine Koppelstange 27 zwischen dem ersten und dem vierten Gelenk 3 und 38 angeordnet ist. Die Drehwinkel des dritten und des vierten Gelenks 18 und 38 sind voneinander abhängig. Eine Gerade durch das dritte und vierte Gelenk 18 und 38 schneidet die Längsachsen 4 und 5 des ersten und zweiten Wagenkastens dann im jeweils gleichen Winkel wenn gilt: Δy1 = Δy2. Es ist auch sichergestellt, dass die Drehungen des dritten und vierten Gelenks 18 und 38 nur zur Querverschiebung der beiden Wagenkästen 1 und 2 zueinander und nicht zur Drehbewegung der Wagenkästen 1 und 2 um die Hochachse beiträgt, welche ausschließlich durch das erste Gelenk 3 vollführt wird.

Weitere Möglichkeiten zur Kopplung der Bewegungen des Drehpunkts 10 der Drehbewegung des ersten und des zweiten Wagenkastens 1 und 2 um die Hochachse des Gelenkfahrzeugs quer zur Längsachse des ersten und quer zur Längsachse des zweiten Wagenkastens 1 und 2 zeigen Fig. 17 und Fig. 18. Die mechanisehe Kopplung erfolgt über drei gelenkig miteinander verbundene Lenker 28.

Die Aufteilung der Querverschieblichkeit ermöglicht die wahlweise Reduktion der erforderlichen Querverschiebewege oder die Nutzung einer größeren Querverschieblichkeit. Eine gleichgerichtete Kopplung der Querverschieblichkeiten verbessert die Ausknicksicherheit des Gelenkfahrzeugs unter Längs- und Querkräften, z.B. im Bergebetrieb, ohne die Vorteile in der Befahrbarkeit von Kurz-, C- oder S-Bögen einzubüßen. Die Kopplung mittels Hydraulikzylindern ermöglicht wiederum eine einfache Blockierbarkeit und/oder Ansteuerbarkeit. Die mechanische Kopplung kommt dagegen mit weniger Bauteilen aus und ist gegenüber der hydraulischen Lösung leckage- und damit driftfrei.

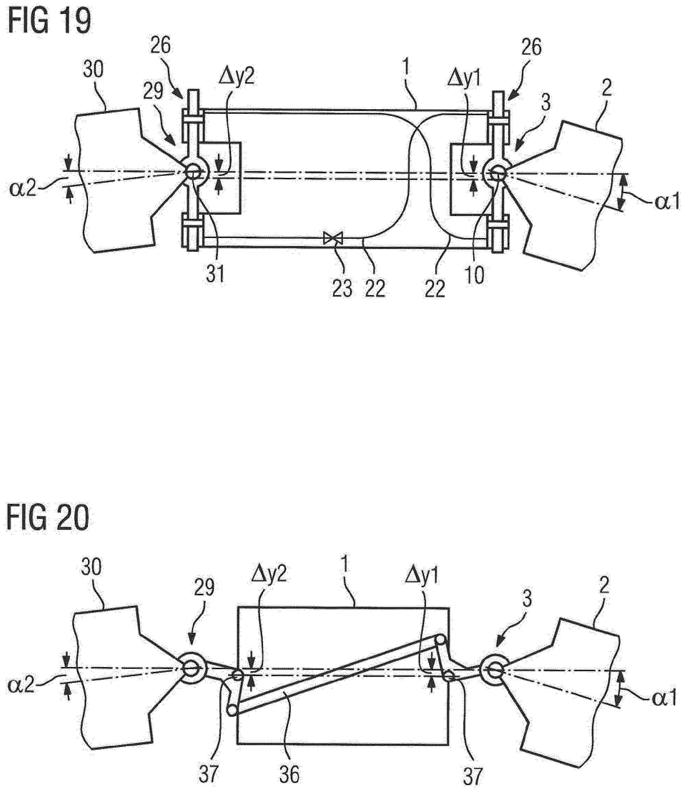

Fig. 19 und 20 zeigen Ausführungsformen der Erfindung, in welchen das Gelenkfahrzeug wenigstens einen weiteren, dritten Wagenkasten 30 umfasst, welcher mit dem ersten Wagenkasten 1 über ein zweites Gelenk 29 gekuppelt ist, wobei das zweite Gelenk 29 zwischen dem ersten und dem dritten Wagenkasten 1 und 30 angeordnet und zumindest zur Ausführung einer Drehbewegung des ersten und des dritten Wagenkastens 1 und 30 um eine Hochachse des Gelenkfahrzeugs und zur Übertragung von Antriebs- und Bremskräften zwischen dem ersten und dem dritten Wagenkasten 1 und 30 geeignet ausgebildet ist, wobei das zweite Gelenk 29 derart beweglich mit dem ersten Wagenkasten 1 verbunden ist, dass der Drehpunkt 31 der Drehbewegung des ersten und des dritten Wagenkastens 1 und 30 um die Hochachse des Gelenkfahrzeugs quer zur Längsachse des ersten Wagenkastens 1 bewegbar ist und dadurch neben der Drehbewegung um die Hochachse auch Bewegungen des ersten und des dritten Wagenkastens 1 und 30 zueinander in Richtung der Fahrzeugquerachse ermöglicht.

Darüber hinaus umfassen die Gelenkfahrzeuge jeweils wenigstens eine zweite Kopplungseinrichtung 22, 23, 26 und 36, welche derart ausgebildet ist, dass eine Bewegung des Drehpunkts 10 der Drehbewegung des ersten und des zweiten Wagenkastens 1 und 2 um die Hochachse des Gelenkfahrzeugs quer zum ersten Wangenkasten 1 um einen ersten Betrag Δy1 zu einer Bewegung des Drehpunkts 31 der Drehbewegung des ersten und des dritten Wagenkastens 1 und 30 um die Hochachse des Gelenkfahrzeugs quer zum dritten Wagenkasten 30 um einen vorgegebenen, vom ersten Betrag = Δy1 abhängigen, zweiten Betrag Δy2 führt. Die Kopplungseinrichtung ist dabei am ersten Wagenkasten angeordnet. In Fig. 19 ist die Kopplungseinrichtung hydraulisch ausgeführt, in Fig. 20 mechanisch per Gelenkstange 36, die gelenkig 37 am ersten Wagenkasten 1 angeordnet ist. Die Querverschiebungen des zweiten und dritten Wagenkastens 2 und 30 zum ersten Wagenkasten 1 erfolgen auf die gleiche Seite des ersten Wagenkastens 1 und um denselben Betrag: Δy1 = Δy2.

Die Anordnung der Querverschieblichkeit der Wagenkästen an beiden Gelenkenden des ersten Wagenkastens ermöglicht die Reduktion der erforderlichen Querverschiebewege oder die Nutzung einer größeren Querverschieblichkeit. Eine gleichgerichtete Kopplung der Querverschieblichkeiten verbessert die Ausknicksicherheit des Gelenkfahrzeugs unter Längs- und Querkräften, z.B. im Bergebetrieb, ohne die Vorteile in der Befahrbarkeit von Kurz-, C- oder S-Bögen einzubüßen. Die Kopplung mittels Hydraulikzylindern ermöglicht wiederum eine einfache Blockierbarkeit und/oder Ansteuerbarkeit. Die mechanische Kopplung kommt dagegen mit weniger Bauteilen aus und ist gegenüber der hydraulischen Lösung leckage- und damit driftfrei.

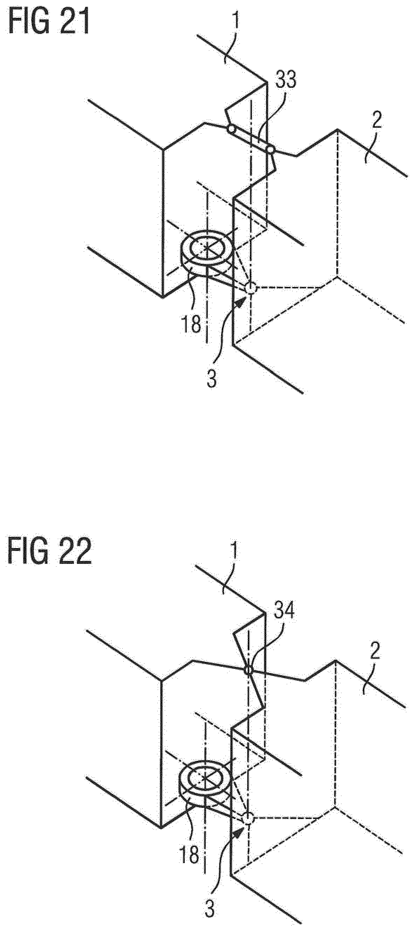

Zur Ausführung einer nicksteifen Gelenkverbindung ist gemäß Fig. 21 das erste Gelenk 3 als sphärisches Gelenk ausgebildet, das dritte Gelenk 18 als Drehkranzverbindung, beispielsweise als vorgespanntes Kreuzrollenlager und im oberen Bereich der Wagenkästen 1 und 2 ist eine Koppelstange 33 zur Blockade des Nickfreiheitsgrades vorgesehen. Diese Gelenkverbindung ist frei von einer Blockade des Wankfreiheitsgrades. Dazu ist die Koppelstange symmetrisch zum Drehpunkt der Drehbewegung des ersten und zweiten Wagenkastens um die Hochachse über dem ersten Gelenk 3 angeordnet. Im Unterschied dazu ist gemäß Fig. 22 ein einfaches sphärisches Gelenk 34 zur Blockade des Nickfreiheitsgrades im Dachbereich des Gelenkfahrzeugs vorgesehen. Die Gelenkachse des einfachen sphärischen Gelenks 34 liegt hier in der Gelenkachse des ersten Gelenks 3. Wankbewegungen sind somit nur noch gekoppelt mit Querverschiebungen der Wagenkästen 1 und 2 zueinander möglich.

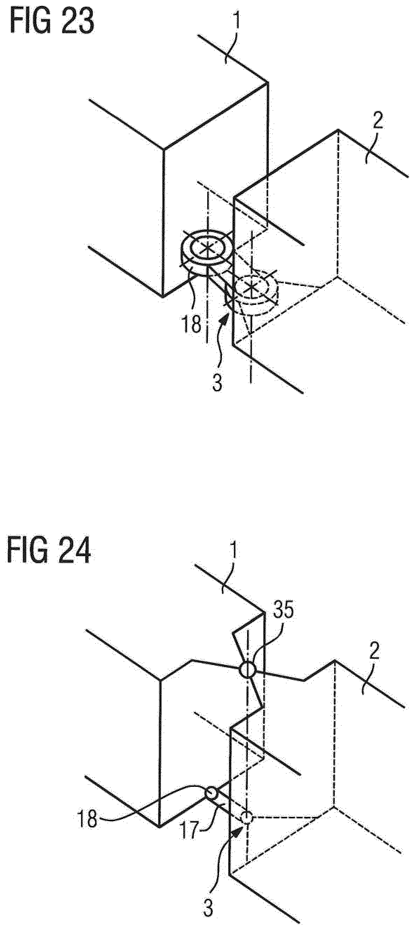

Gemäß Fig. 23 sind das erste und das dritte Gelenk 3 und 18 als Drehkranzverbindung, beispielsweise als vorgespanntes Kreuzrollenlager, ausgestaltet. Somit ist die Gelenkverbindung zwischen den Wagenkästen 1 und 2 nick- und wanksteif. Die wanksteife Ausführung kann unter Umständen sinnvoll sein, um eine erhöhte Standsicherheit gegen Seitenwind zu erreichen oder einen reduzierten Lichtraumbedarf aufgrund von Wankbewegungen einzuhalten.

Die Ausgestaltung des Gelenkfahrzeugs gemäß Fig. 24 weist ein sphärisches erstes Gelenk 3 im unteren Bereich zwischen den Wagenkästen 1 und 2 auf, welches über eine Koppelstange 17 und über ein sphärisches drittes Gelenk 18 mit dem ersten Wagenkasten 1 verbunden ist. Im oberen Bereich des Gelenkfahrzeugs ist zwischen den Wagenkästen 1 und 2 ein großes Gelenk 35 zur Vertikalkraftabstützung vorgesehen. Das große Gelenk ist ebenfalls sphärisch und entsprechend zur Kraftübertragung dimensioniert. Die Gelenkverbindung zwischen den Wagenkästen 1 und 2 ist somit nicksteif ausgeführt. Wankbewegungen sind nur gekoppelt mit der Querverschiebung der Wagenkästen 1 und 2 zueinander möglich.

## Patentansprüche

1. Gelenkfahrzeug mit einem ersten und wenigstens einem weiteren, zweiten Wagenkasten (1, 2), welche über ein erstes Gelenk (3) miteinander gekuppelt sind, wobei das erste Gelenk (3) zwischen dem ersten und dem zweiten Wagenkasten (1, 2) angeordnet und als Dreh- oder Kugelgelenk mit einem ersten und einem zweiten Gelenkkörper zumindest zur Ausführung einer Drehbewegung des ersten und des zweiten Wagenkastens (1, 2) um eine Hochachse des Gelenkfahrzeugs und zur Übertragung von Antriebs- und Bremskräften zwischen dem ersten und dem zweiten Wagenkasten (1, 2) geeignet ausgebildet ist, wobei eine Gelenkachse des ersten Gelenks (3) und die Hochachse des Gelenkfahrzeugs, um welche der erste und der zweite Wagenkasten drehbar über das erste Gelenk miteinander verbunden sind, zusammenfallen und der Drehpunkt der Drehbewegung des ersten und des zweiten Wagenkastens um die Hochachse des Gelenkfahrzeugs in der Gelenkachse liegt, **dadurch gekennzeichnet, dass** das erste Gelenk (3) derart beweglich mit dem ersten Wagenkasten (1) verbunden ist, dass der Drehpunkt der Drehbewegung des ersten und des zweiten Wagenkastens (1, 2) um die Hochachse des Gelenkfahrzeugs quer zur Längsachse des ersten Wagenkastens (1) bewegbar ist und dadurch neben der Drehbewegung um die Hochachse auch Bewegungen des ersten und des zweiten Wagenkastens (1, 2) zueinander in Richtung der Fahrzeugquerachse ermöglicht, wobei das erste Gelenk (3) quer zur Längsachse des ersten Wagenkastens bewegbar mit dem ersten Wagenkasten verbunden ist.

2. Gelenkfahrzeug nach Anspruch 1, **dadurch gekennzeichnet, dass** das erste Gelenk (3) geeignet ausgebildet ist, um Stützlasten zwischen dem ersten und dem zweiten Wagenkasten (1, 2) zu übertragen.

3. Gelenkfahrzeug nach einem der Ansprüche 1 oder 2, **dadurch gekennzeichnet, dass** das erste Gelenk (3) starr mit dem zweiten Wagenkasten (2) verbunden ist.

4. Gelenkfahrzeug nach einem der Ansprüche 1 bis 3, **dadurch gekennzeichnet, dass** das erste Gelenk (3) in Querrichtung des ersten Wagenkastens (1) verschiebbar mit dem ersten Wagenkasten (1) verbunden ist.

5. Gelenkfahrzeug nach einem der Ansprüche 1 bis 3, **dadurch gekennzeichnet, dass** das erste Gelenk (3) um die Hochachse des Gelenkfahrzeugs drehbar mit dem ersten Wagenkasten (1) verbunden ist.

6. Gelenkfahrzeug nach einem der Ansprüche 1 bis 5, **dadurch gekennzeichnet, dass** es wenigstens ein Rückstellelement (19, 21, 26) umfasst, welches ausgebildet ist, eine vorgegebene Kraft größer Null auf das erste Gelenk (3) oder auf eine Verbindung des ersten Gelenks mit dem ersten Wagenkasten (1) aufzubringen, welche einer Bewegung des Drehpunkts der Drehbewegung des ersten und des zweiten Wagenkastens (1, 2) um die Hochachse des Gelenkfahrzeugs quer zur Längsachse des ersten Wagenkastens (1) aus einer vorgegebenen Ruhelage heraus entgegenwirkt.

7. Gelenkfahrzeug nach Anspruch 6, **dadurch gekennzeichnet, dass** die vorgegebene Kraft größer ist als ein Reibmoment im ersten Gelenk.

8. Gelenkfahrzeug nach einem der Ansprüche 6 oder 7, **dadurch gekennzeichnet, dass** es wenigstens ein Dämpferelement umfasst, welches zumindest einer Bewegung des Drehpunkts der Drehbewegung des ersten und des zweiten Wagenkastens (1, 2) um die Hochachse des Gelenkfahrzeugs quer zur Längsachse des ersten Wagenkastens (1) aus einer vorgegebenen Ruhelage heraus dämpft.

9. Gelenkfahrzeug nach einem der Ansprüche 1 bis 8, **dadurch gekennzeichnet, dass** es Endanschläge umfasst, welche ausgebildet und angeordnet sind zur Begrenzung der Bewegung des Drehpunkts der Drehbewegung des ersten und des zweiten Wagenkastens (1, 2) um die Hochachse des Gelenkfahrzeugs quer zur Längsachse des ersten Wagenkastens (1) aus einer vorgegebenen Ruhelage heraus.

10. Gelenkfahrzeug nach einem der Ansprüche 1, 2 oder 4 bis 9, **dadurch gekennzeichnet, dass** das erste Gelenk derart beweglich mit dem zweiten Wagenkasten (2) verbunden ist, dass der Drehpunkt der Drehbewegung des ersten und des zweiten Wagenkastens (1, 2) um die Hochachse des Gelenkfahrzeugs quer zur Längsachse des zweiten Wagenkastens (2) bewegbar ist, wobei das Gelenkfahrzeug eine erste Kopplungseinrichtung umfasst, welche mit dem ersten und dem zweiten Wagenkasten (1, 2) verbunden und derart ausgebildet ist, dass eine Bewegung des Drehpunkts der Drehbewegung des ersten und des zweiten Wagenkastens (1, 2) um die Hochachse des Gelenkfahrzeugs quer zum ersten Wagenkasten (1) um einen ersten Betrag zu einer Bewegung des Drehpunkts der Drehbewegung des ersten und des zweiten Wagenkastens (1, 2) um die Hochachse des Gelenkfahrzeugs quer zum zweiten Wagenkasten (2) um einen vorgegebenen, vom ersten Betrag abhängigen, zweiten Betrag führt.

11. Gelenkfahrzeug nach einem der Ansprüche 1 bis 10, **dadurch gekennzeichnet, dass** es wenigstens einen weiteren, dritten Wagenkasten (30) umfasst, welcher mit dem ersten Wagenkasten (1) über ein zweites Gelenk (29) gekuppelt ist, wobei das zweite Gelenk (29) zwischen dem ersten und dem dritten Wagenkasten (1, 30) angeordnet und zumindest zur Ausführung einer Drehbewegung des ersten und des dritten Wagenkastens (1, 30) um eine Hochachse des Gelenkfahrzeugs und zur Übertragung von Antriebs- und Bremskräften zwischen dem ersten und dem dritten Wagenkasten (1, 30) geeignet ausgebildet ist, **dadurch gekennzeichnet, dass** das zweite Gelenk (29) derart beweglich mit dem ersten Wagenkasten (1) verbunden ist, dass der Drehpunkt der Drehbewegung des ersten und des dritten Wagenkastens (1, 30) um die Hochachse des Gelenkfahrzeugs quer zur Längsachse des ersten Wagenkastens (1) bewegbar ist und dadurch neben der Drehbewegung um die Hochachse auch Bewegungen des ersten und des dritten Wagenkastens (1, 30) zueinander in Richtung der Fahrzeugquerachse ermöglicht, wobei das Gelenkfahrzeug eine zweite Kopplungseinrichtung umfasst, welche derart ausgebildet ist, dass eine Bewegung des Drehpunkts der Drehbewegung des ersten und des zweiten Wagenkastens (1, 2) um die Hochachse des Gelenkfahrzeugs quer zum ersten Wagenkasten (1) um einen ersten Betrag zu einer Bewegung des Drehpunkts der Drehbewegung des ersten und des dritten Wagenkastens (1, 30) um die Hochachse des Gelenkfahrzeugs quer zum dritten Wagenkasten (30) um einen vorgegebenen, vom ersten Betrag abhängigen, zweiten Betrag führt.

12. Gelenkfahrzeug nach einem der Ansprüche 1 bis 11, **dadurch gekennzeichnet, dass** das erste Gelenk (3) derart ausgebildet und zwischen dem ersten und dem zweiten Wagenkasten (1, 2) angeordnet ist, dass ein Verhältnis der Abstände des Drehpunkts der Drehbewegung des ersten und des zweiten Wagenkastens (1, 2) um die Hochachse des Gelenkfahrzeugs zum ersten und zum zweiten Wagenkasten in einem Intervall von 0,25 bis 4, insbesondere in einem Intervall von 0,8 bis 1,25, liegen.

13. Gelenkfahrzeug nach einem der Ansprüche 1 bis 12, **dadurch gekennzeichnet, dass** der erste und der zweite Wagenkasten (1, 2) jeweils auf einem Fahrwerk abgestützt sind.

14. Gelenkfahrzeug nach einem der Ansprüche 1 bis 13, **dadurch gekennzeichnet, dass** das erste Gelenk (3) ausgebildet ist zur Ausführung einer Nickbewegung des ersten und des zweiten Wagenkastens (1, 2) um eine Querachse des Gelenkfahrzeugs und/oder zur Ausführung einer Wankbewegung des ersten und des zweiten Wagenkastens (1, 2) um eine Längsachse des Gelenkfahrzeugs.

15. Gelenkfahrzeug nach einem der Ansprüche 1 bis 14, **dadurch gekennzeichnet, dass** das erste Gelenk (3) unterhalb eines Wagenübergangs zwischen dem ersten und dem zweiten Wagenkasten (1, 2) zum Übergang von Personen zwischen dem ersten und dem zweiten Wagenkasten (1, 2) angeordnet ist.

## Claims

1. Articulated vehicle with a first and at least one further, second vehicle body (1, 2) which are coupled to each other via a first joint (3), wherein the first joint (3) is arranged between the first and the second vehicle body (1, 2) and is suitably designed as a rotating joint or ball-and-socket joint with a first and a second joint body at least for carrying out a rotational movement of the first and the second vehicle body (1, 2) about a vertical axis of the articulated vehicle and for transmitting driving and braking forces between the first and the second vehicle body (1, 2), wherein a joint axis of the first joint (3) and the vertical axis of the articulated vehicle, about which the first and the second vehicle bodies are connected rotatably to each other via the first joint, coincide, and the pivot point of the rotational movement of the first and the second vehicle body about the vertical axis of the articulated vehicle lies in the joint axis, **characterized in that** the first joint (3) is connected movably to the first vehicle body (1) in such a manner that the pivot point of the rotational movement of the first and the second vehicle body (1, 2) about the vertical axis of the articulated vehicle is movable transversely with respect to the longitudinal axis of the first vehicle body (1) and, as a result, in addition to the rotational movement about the vertical axis, also permits movements of the first and the second vehicle body (1, 2) with respect to each other in the direction of the transverse axis of the vehicle, wherein the first joint (3) is connected to the first vehicle body so as to be movable transversely with respect to the longitudinal axis of the first vehicle body.

2. Articulated vehicle according to Claim 1, **characterized in that** the first joint (3) is suitably designed in order to transmit supporting loads between the first and the second vehicle body (1, 2).

3. Articulated vehicle according to either of Claims 1 and 2, **characterized in that** the first joint (3) is connected rigidly to the second vehicle body (2).

4. Articulated vehicle according to one of Claims 1 to 3, **characterized in that** the first joint (3) is connected to the first vehicle body (1) so as to be displaceable in the transverse direction of the first vehicle body (1).

5. Articulated vehicle according to one of Claims 1 to 3, **characterized in that** the first joint (3) is connected to the first vehicle body (1) so as to be rotatable about the vertical axis of the articulated vehicle.

6. Articulated vehicle according to one of Claims 1 to 5, **characterized in that** it comprises at least one resetting element (19, 21, 26) which is designed to apply a predetermined force of greater than zero to the first joint (3) or to a connection of the first joint to the first vehicle body (1), said force counteracting a movement of the pivot point of the rotational movement of the first and the second vehicle body (1, 2) about the vertical axis of the articulated vehicle transversely with respect to the longitudinal axis of the first vehicle body (1) from a predetermined rest position.

7. Articulated vehicle according to Claim 6, **characterized in that** the predetermined force is greater than a frictional torque in the first joint.

8. Articulated vehicle according to either of Claims 6 and 7, **characterized in that** it comprises at least one damper element which damps at least one movement of the pivot point of the rotational movement of the first and the second vehicle body (1, 2) about the vertical axis of the articulated vehicle transversely with respect to the longitudinal axis of the first vehicle body (1) from a predetermined rest position.

9. Articulated vehicle according to one of Claims 1 to 8, **characterized in that** it comprises end stops which are designed and arranged for limiting the movement of the pivot point of the rotational movement of the first and the second vehicle body (1, 2) about the vertical axis of the articulated vehicle transversely with respect to the longitudinal axis of the first vehicle body (1) from a predetermined rest position.

10. Articulated vehicle according to one of Claims 1, 2 or 4 to 9, **characterized in that** the first joint is movably connected to the second vehicle body (2) in such a manner that the pivot point of the rotational movement of the first and the second vehicle body (1, 2) about the vertical axis of the articulated vehicle is movable transversely with respect to the longitudinal axis of the second vehicle body (2), wherein the articulated vehicle comprises a first coupling device which is connected to the first and the second vehicle body (1, 2) and is designed in such a manner that a movement of the pivot point of the rotational movement of the first and the second vehicle body (1, 2) about the vertical axis of the articulated vehicle by a first amount transversely with respect to the vehicle body (1) leads to a movement of the pivot point of the rotational movement of the first and the second vehicle body (1, 2) about the vertical axis of the articulated vehicle by a predetermined second amount, which depends on the first amount, transversely with respect to the second vehicle body (2).

11. Articulated vehicle according to one of Claims 1 to 10, **characterized in that** it comprises at least one further, third vehicle body (30) which is coupled to the first vehicle body (1) via a second joint (29), wherein the second joint (29) is arranged between the first and the third vehicle body (1, 30) and is suitably designed at least for carrying out a rotational movement of the first and the third vehicle body (1, 30) about a vertical axis of the articulated vehicle and for transmitting driving and braking forces between the first and the third vehicle body (1, 30), **characterized in that** the second joint (29) is movably connected to the first vehicle body (1) in such a manner that the pivot point of the rotational movement of the first and the third vehicle body (1, 30) about the vertical axis of the articulated vehicle is movable transversely with respect to the longitudinal axis of the first vehicle body (1) and, as a result, in addition to the rotational movement about the vertical axis, also permits movements of the first and the third vehicle body (1, 30) with respect to each other in the direction of the transverse axis of the vehicle, wherein the articulated vehicle comprises a second coupling device which is designed in such a manner that a movement of the pivot point of the rotational movement of the first and second vehicle body (1, 2) about the vertical axis of the articulated vehicle by a first amount transversely with respect to the first vehicle body (1) leads to a movement of the pivot point of the rotational movement of the first and the third vehicle body (1, 30) about the vertical axis of the articulated vehicle by a predetermined second amount, which depends on the first amount, transversely with respect to the third vehicle body (30).

12. Articulated vehicle according to one of Claims 1 to 11, **characterized in that** the first joint (3) is designed and arranged between the first and the second vehicle body (1, 2) in such a manner that the ratio of the distances of the pivot point of the rotational movement of the first and the second vehicle body (1, 2) about the vertical axis of the articulated vehicle is within a range of 0.25 to 4, in particular within a range of 0.8 to 1.25, with respect to the first and to the second vehicle body.

13. Articulated vehicle according to one of Claims 1 to 12, **characterized in that** the first and the second vehicle body (1, 2) are each supported on a chassis.

14. Articulated vehicle according to one of Claims 1 to 13, **characterized in that** the first joint (3) is designed to carry out a pitching movement of the first and the second vehicle body (1, 2) about a transverse axis of the articulated vehicle and/or to carry out a rolling movement of the first and the second vehicle body (1, 2) about a longitudinal axis of the articulated vehicle.

15. Articulated vehicle according to one of Claims 1 to 14, **characterized in that** the first joint (3) is arranged below a transfer between the first and the second vehicle body (1, 2) for the transfer of people between the first and the second vehicle body (1, 2).

## Revendications

1. Véhicule articulé, comprenant une première et au moins une deuxième autre caisse (1, 2), qui sont accouplées entre elles par une première articulation (3), la première articulation (3) étant disposée entre la première et la deuxième caisses (1, 2) et étant constituée sous la forme d'une articulation pivotante ou d'une rotule, de manière propre à exécuter au moins un mouvement de pivotement de la première et de la deuxième caisses (1, 2) autour d'un axe vertical du véhicule articulé et à transmettre des forces d'entraînement et de freinage entre la première et la deuxième caisse (1, 2), un axe d'articulation de la première articulation (3) et l'axe vertical du véhicule articulé, autour duquel la première et la deuxième caisses sont reliées entre elles avec possibilité de pivoter par la première articulation, étant en coïncidence et le point de pivotement du mouvement de pivotement de la première et la deuxième caisses autour de l'axe vertical du véhicule articulé se trouvant sur l'axe de l'articulation, **caractérisé en ce que** la première articulation (3) est reliée de manière mobile à la première caisse (1), de façon à ce que le point de pivotement du mouvement de pivotement de la première et de la deuxième caisses (1, 2), autour de l'axe vertical du véhicule articulé, puisse se déplacer transversalement à l'axe longitudinal de la première caisse (1) et rendre ainsi possible, outre le mouvement de pivotement autour de l'axe vertical, également des mouvements de la première et de la deuxième caisses (1, 2), l'une par rapport à l'autre, dans la direction de l'axe transversal du véhicule, la première articulation (3) étant, de manière mobile transversalement à l'axe longitudinal de la première caisse, reliée à la première caisse.

2. Véhicule articulé suivant la revendication 1, **caractérisé en ce que** la première articulation (3) est constituée de manière propre à transmettre des charges d'appui entre la première et la deuxième caisses (1, 2).

3. Véhicule articulé suivant l'une des revendications 1 ou 2, **caractérisé en ce que** la première articulation (3) est reliée rigidement à la deuxième caisse (2).

4. Véhicule articulé suivant l'une des revendications 1 à 3, **caractérisé en ce que** la première articulation (3) est reliée à la première caisse (1), de manière à pouvoir coulisser dans la direction transversale de la première caisse (1).

5. Véhicule articulé suivant l'une des revendications 1 à 3, **caractérisé en ce que** la première articulation (3) est reliée à la première caisse (1) de manière à pouvoir pivoter autour de l'axe vertical du véhicule articulé.

6. Véhicule articulé suivant l'une des revendications 1 à 5, **caractérisé en ce qu'**il comprend au moins un élément (19, 21, 26) de rappel, constitué pour appliquer une force donnée à l'avance plus grande que zéro à la première articulation (3) ou à une liaison de la première articulation à la caisse (1), force qui s'oppose à un déplacement du point de pivotement du mouvement de pivotement de la première et de la deuxième caisses (1, 2), autour de l'axe vertical du véhicule articulé, transversalement à l'axe longitudinal de la première caisse (1) à partir d'une position de repos donnée à l'avance.

7. Véhicule articulé suivant la revendication 6, **caractérisé en ce que** la force donnée à l'avance est plus grande qu'un couple de frottement de la première articulation.

8. Véhicule articulé suivant l'une des revendications 6 ou 7, **caractérisé en ce qu'**il comprend au moins un élément d'amortissement, qui amortit au moins un déplacement du point de pivotement du mouvement de pivotement de la première et de la deuxième caisses (1, 2), autour de l'axe vertical du véhicule articulé, transversalement à l'axe longitudinal de la première caisse (1) à partir d'une position de repos donnée à l'avance.

9. Véhicule articulé suivant l'une des revendications 1 à 8, **caractérisé en ce qu'**il comprend une butée de fin de course, constituée et disposée de manière à limiter le déplacement du point de pivotement du mouvement de pivotement de la première et de la deuxième caisses (1, 2), autour de l'axe vertical du véhicule articulé, transversalement à l'axe longitudinal de la première caisse (1) à partir d'une position de repos donnée à l'avance.

10. Véhicule articulé suivant l'une des revendications 1, 2 ou 4 à 9, **caractérisé en ce que** la première articulation est reliée de manière mobile à la deuxième caisse (2), de manière à ce que le point de pivotement du mouvement de pivotement de la première et de la deuxième caisses (1, 2), autour de l'axe vertical du véhicule ferroviaire, soit mobile transversalement à l'axe longitudinal de la deuxième caisse (2), le véhicule articulé comprenant un premier dispositif d'accouplement, qui est relié à la première et à la deuxième caisses (1, 2) et qui est constitué de manière à ce qu'un déplacement du point de pivotement du mouvement de pivotement de la première et de la deuxième caisses (1, 2), autour de l'axe vertical du véhicule articulé, transversalement à la première caisse (1) d'un premier montant donne un déplacement du point de pivotement du mouvement de pivotement de la première et de la deuxième caisses (1, 2), autour de l'axe vertical du véhicule ferroviaire, transversalement à la deuxième caisse (2) d'un deuxième montant donné à l'avance, qui dépend du premier montant.

11. Véhicule articulé suivant l'une des revendications 1 à 10, **caractérisé en ce qu'**il comprend au moins une troisième autre caisse (30), qui est accouplée à la première caisse (1) par une deuxième articulation (29), la deuxième articulation (29) étant disposée entre la première et la troisième caisses (1, 30) et étant constituée de manière propre à exécuter au moins un mouvement de pivotement de la première et de la troisième caisse (1, 30) autour d'un axe vertical du véhicule articulé et à transmettre des force d'entraînement et de freinage entre la première et la troisième caisse (1, 30),
**caractérisé en ce que** la deuxième articulation (29) est reliée de manière mobile à la première caisse (1), de manière à ce que le point de pivotement du mouvement de pivotement de la première et de la troisième caisses (1, 30), autour de l'axe vertical du véhicule articulé, soit mobile transversalement à l'axe longitudinal de la première caisse (1) et rende ainsi possible, outre le mouvement de pivotement autour de l'axe vertical, également des mouvements de la première et de la troisième caisses (1, 30) l'une par rapport à l'autre dans la direction de l'axe transversal du véhicule, le véhicule articulé comprenant un deuxième dispositif d'accouplement, constitué de manière à ce qu'un déplacement du point de pivotement du mouvement de pivotement de la première et de la deuxième caisses (1, 2), autour de l'axe vertical du véhicule articulé, transversalement à la première caisse (1) d'un premier montant donne un déplacement du point de pivotement du mouvement de pivotement de la première et de la troisième caisses (1, 30), autour de l'axe vertical du véhicule articulé, transversalement à la troisième caisse (30) d'un deuxième montant donné à l'avance, qui dépend du premier montant.

12. Véhicule articulé suivant l'une des revendications 1 à 11, **caractérisé en ce que** la première articulation (3) est constituée et disposée entre la première et la deuxième caisse (1, 2), de manière à ce qu'un rapport des distances du point de pivotement du mouvement de pivotement de la première et de la deuxième caisses (1, 2), autour de l'axe vertical du véhicule articulé, à la première et à la deuxième caisse, se trouve dans un intervalle de 0,25 à 4, notamment dans un intervalle de 0,8 à 1,25.

13. Véhicule articulé suivant l'une des revendications 1 à 12, **caractérisé en ce que** la première et la deuxième caisses (1, 2) sont appuyées chacune sur un train de roulement.

14. Véhicule articulé suivant l'une des revendications 1 à 13, **caractérisé en ce que** la première articulation (3) est constituée pour l'exécution d'un mouvement de galop de la première et de la deuxième caisses (1, 2) autour d'un axe transversal du véhicule articulé et/ou pour l'exécution d'un mouvement de roulis de la première et de la deuxième caisses (1, 2) autour d'un axe longitudinal du véhicule articulé.

15. Véhicule articulé suivant l'une des revendications 1 à 14, **caractérisé en ce que** la première articulation (3) est disposée en dessous d'une intercirculation entre la première et la deuxième caisse (1, 2) pour le passage de personnes entre la première et la deuxième caisse (1, 2).
